# EUROPEAN PATENT SPECIFICATION

(11) **EP 0 373 755 B1**
(45) Date of publication and mention of the grant of the patent: **20.12.1995**
(21) Application number: 89310626.0
(22) Date of filing: 17.10.1989
(51) Int. Cl.: H04J 3/16

(54) **Framing algorithms minimizing channel excursion**
Rahmenalgorithmus für Minimierung von Kanalauswanderung
Algorithmes de mise en trame pour minimiser l'excursion de canal

(30) Priority: 19.10.1988 US 259855; 19.10.1988 US 259856
(43) Date of publication of application: 20.06.1990
(73) Proprietor: General DataComm, Inc., Middlebury Connecticut 06762 (US)
(72) Inventor: Bains, Kuldip S., Watertown Connecticut 06795 (US); Gordon, David P., Stamford Connecticut 06905 (US)
(74) Representative: Gibson, Stewart Harry

(56) References cited:
- EP-A- 0 251 587
- DE-A- 2 625 528
- US-A- 3 303 475

## Description

The present invention relates to time-division-multiplexed (TDM) telecommunication systems. More particularly, the invention relates to methods for inserting channel selects into a frame wherein the excursions of the channels are minimized.

In multiplexing information from various channels of varying speeds, it is necessary to buffer information from each channel as the receiver of the multiplexer can only attend to one channel at a time, Each channel typically has its own buffer, and the input by the channel into the buffer relative to the output of the buffer to the receiver is typically asynchronous. It is clearly important that the buffers do not become empty or full at any instant as the empty or full condition would indicate duplication or loss of data respectively.

Framing algorithms are utilized to set the frame length as well as the number of selects from each channel into the frame. It is then necessary to create a time sequence table with entries which define the order in which the receiver responds to the channels. Each entry in the table represents one bit (or in byte systems - one byte) time of the receiver. Each "channel" must have at least one entry in the frame (even if the entry represents a subsidiary frame such as a secondary or tertiary frame), and the frame is repeated at a rate which is the greatest common divisor of the channel rates. In general, some channels have a large number of entries in the table while other channels may have only a few or even a single entry. It is then desirable to space the entries for each channel such that they are an equal distance apart; i.e. to minimize the accumulated deviation (excursion) from the ideal space for the channel selects in the frame.

Two methods for limiting excursion are known in the art. A first method, the "priority method" is to order the channels according to their speed and to start with the fastest channel and place the fastest channel selects as closely as possible to their ideal position. Then, the procedure is repeated for the next highest channel. If the ideal select slot is take by the previous channel, then the nearest vacant slot is sought. The procedure continues until all of the channel selects are placed in the frame. The obvious disadvantage of the "priority method" scheme is that slower channels are often moved relatively far away from their ideal slots. A further disadvantage is that considerable iterative effort is required to find and fill vacant slots.

A second method for limiting excursion is described in detail in commonly owned U.S. Patent #4,727,536. In that patent, a real time allocation process is described where the channels are arranged in descending order of channel rates and starting with the fastest channel, the channels are scanned to determine whether they are ready to contribute a bit to the aggregate. Initially, all the channels are considered ready to contribute. After is first contribution to the frame, the readiness of a channel is determined by the position of a counter associated with the channel. The counter is initially set equal to the frame length. Then, each time a bit is inserted into the frame from the highest rate channel which is ready, the position counter of each channel is adjusted by subtracting the number of selects for that channel from the count, and the position counter of the contributing channel is adjusted by adding the frame length value to the counter value. When the position count reaches zero or goes negative, the channel is marked to be ready to contribute. The procedure of choosing the fastest channel which is ready to contribute continues until the frame is complete such that all the channels have contributed their proportional number of bits.

Although the method of U.S. Patent #4,727,536 is non-iterative and hence efficient, it has some drawbacks in terms of excursion. Unwanted excursion occurs because the method prioritises the channels and tends to be more responsive to the faster channels. In the case of a large number of channels, the non-iterative method can introduce significant excursion to low order channels.

### SUMMARY OF THE INVENTION

It is therefore an object of the invention to provide efficient framing algorithms which minimize channel excursion.

It is a further object of the invention to provide real-time, efficient framing algorithms which assigns cost (or price) functions to channels and which minimize cost.

In accord with the objects of the invention, algorithms for ordering selects for a plurality of channels into a frame are provided. The algorithms require the initializing of a channel ready indicator and a channel select position counter in each of the channels to be multiplexed. According to a first embodiment, the first and succeeding channel selects are chosen based on which ready channel has the lowest "price" (i.e. highest "cost") with the selection of the lowest price (highest cost) channel thereby minimizing total cost. The "price" of a channel is defined by the value of the channel select position counter divided by the number of selects from that channel to the frame, and the "cost" is the inverse thereof (for simplicity, the discussion hereinafter will refer to price only). After a select is made, the position counters of all of the channels (including the selected channel) are decremented by a value corresponding to the number of selects for that channel in the frame, and the position counter of the selected channel only is increased by the total number of selects in the frame. After such updating, and the recalculating of prices, another selection for the frame may be made based on the relative prices of the ready channels. Because the price of each channel is not necessarily an integer value, but rather os a fraction based on how far (in terms of selects) a particular channel is from receiving another bit, channels of different rates will rarely have equal prices. Where channels have equal prices, either channel may be chosen. However, preferably, the channels are also ordered by rate (i.e. equivalently by the number of selects of the channel in the frame), and where prices are equal, a select is made of the channel having the highest rate. This first embodiment guarantees minimum excursion such that no channel will ever have more than one bit available for placement in the frame (i.e. zero bits of excursion). The advantage of such a guarantee is the knowledge that in operation, a multiplexer will not cause an overflow of a channel buffer due to a large excursion. In fact, the minimum excursion provided by the algorithm permits the reduction in the size of the channel buffers.

In a second embodiment, after initialization, the first and succeeding channel selects are chosen based at least on the respective values of the channel ready counters such that a channel having a ready counter of relative higher value is always selected before a channel having a ready counter of relative lower value. After a select is made, the ready counter of the selected channel is decremented, and the position counters of the channels are decremented by a value corresponding to the number of selects for that channel in the frame. If the position counter of a channel reaches zero or goes negative as a result of the decrementing, the position counter of that channel is increased by the total number of selects in the frame, and the ready counter for that channel in incremented by one. After such updating, another selection for the frame may be made based on the ready counter values of the channels. Because many of the channel ready counters will often have identical values, the channels are preferably ordered by rate (i.e. equivalently by the number of selects of the channel in the frame). In choosing among these channels having ready counter of equal values, a select is made of the channel having the highest rate. However, even if the selection was made arbitrarily (e.g. by channel number), the provided algorithm guarantees that no channel will ever have an excursion of more than one bit available for placement in the frame.

Other objects and advantages of the invention will become evident upon reference to the detailed description in conjunction with the provided figures.

### BRIEF DESCRIPTION OF THE DRAWINGS

Figures 1A and 1Aa together comprise a flow chart illustrating a first preferred embodiment of the select determination method of the invention:
Figures 1B and 1Ba together comprise a flow chart illustrating an alternative first preferred embodiment of the select determination method of the invention;
Figures 1C and 1Ca together comprise a flow chart illustrating a second embodiment of the select determination method of the invention;
Figure 2a1 is a chart of frame selects generated by the first preferred or alternate first preferred method invention;

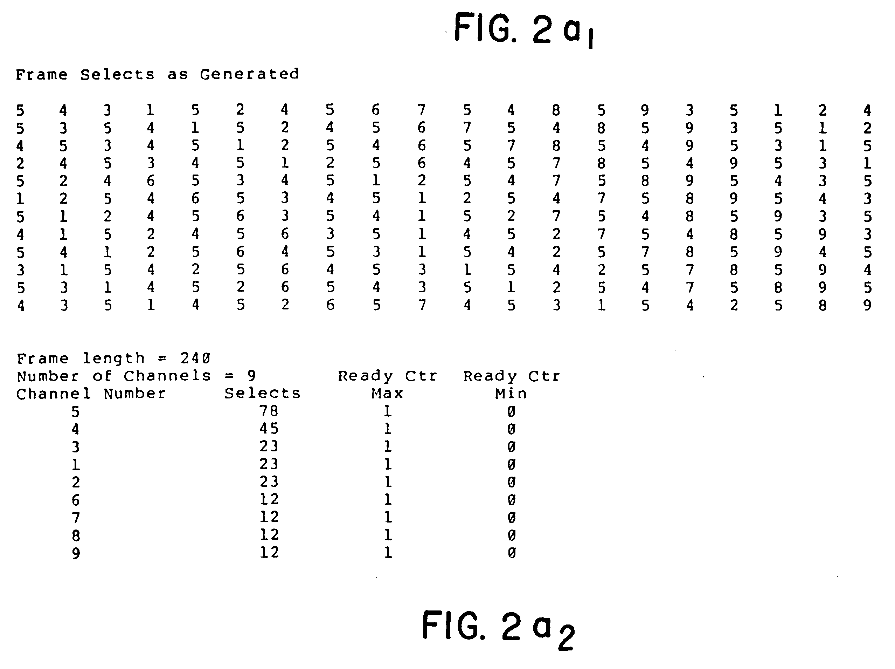

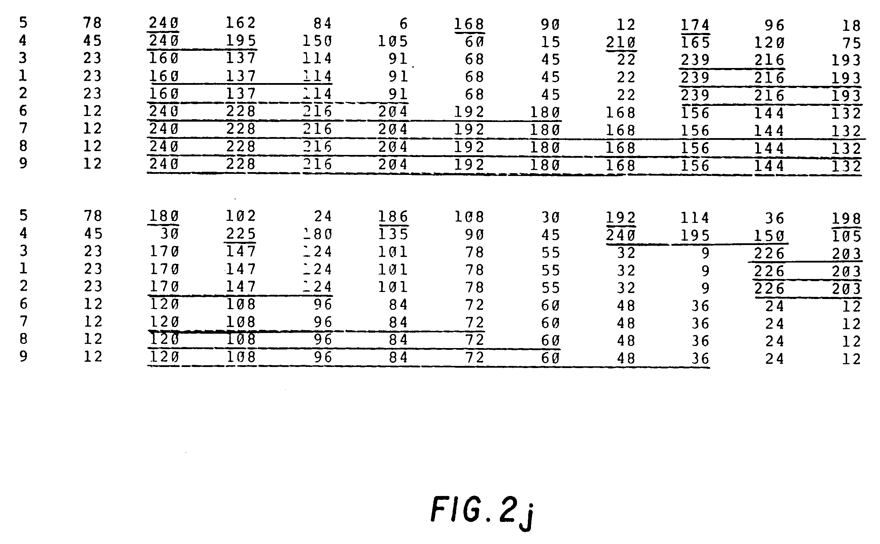

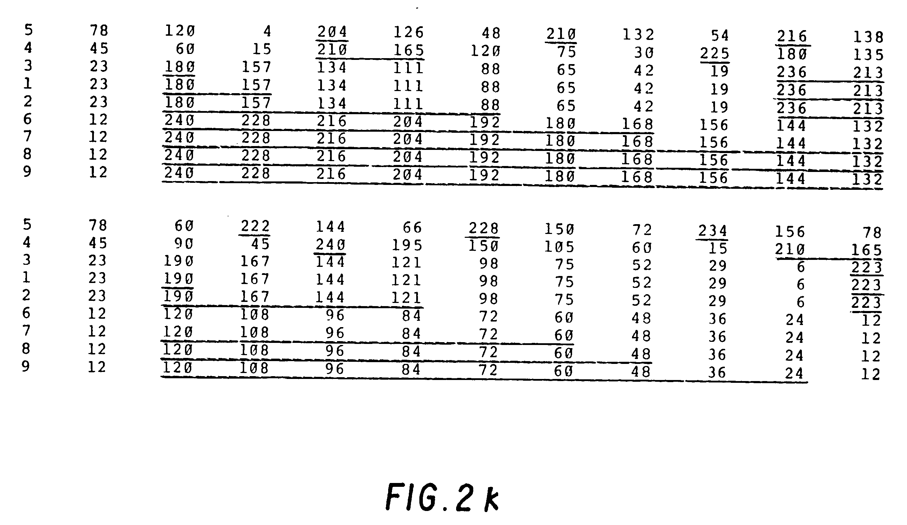

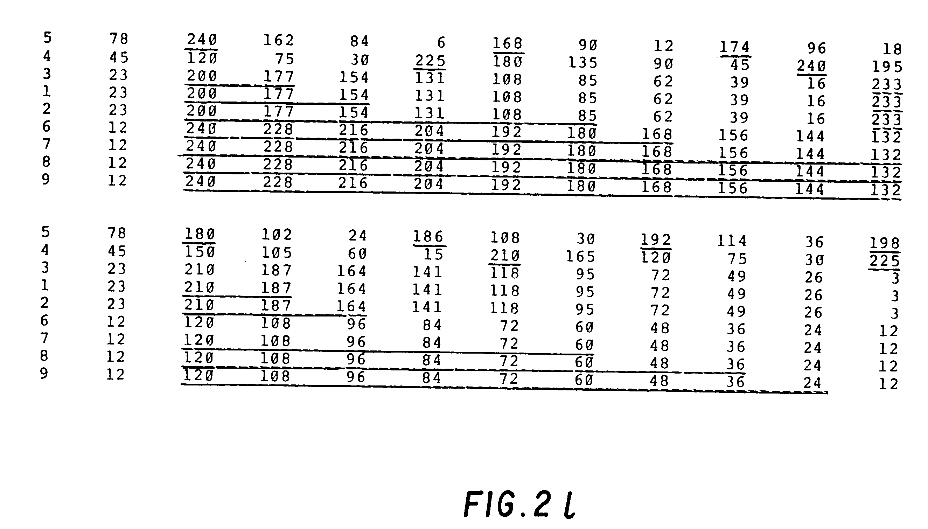

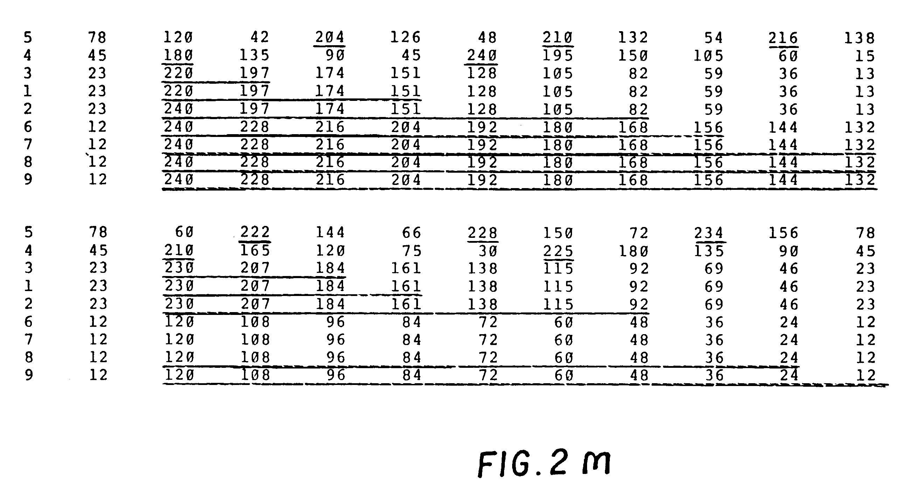

Figure 2a2 is a chart of channel parameters of the hypothetical channels from which the selects are generated;

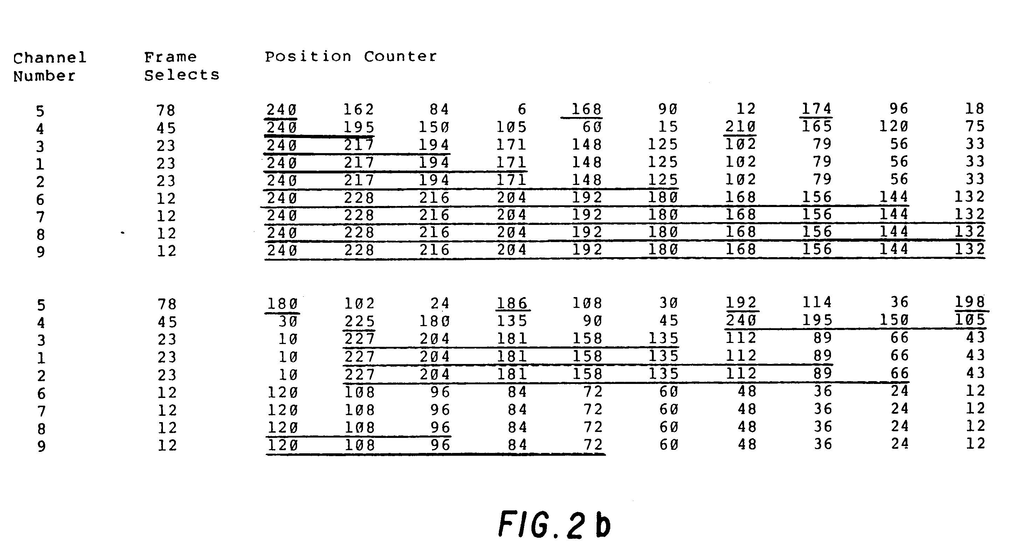

Figures 2b-2m are charts of the computations performed in generating a hypothetical frame according to the first preferred method invention, and a chart of the resulting frame selects; and

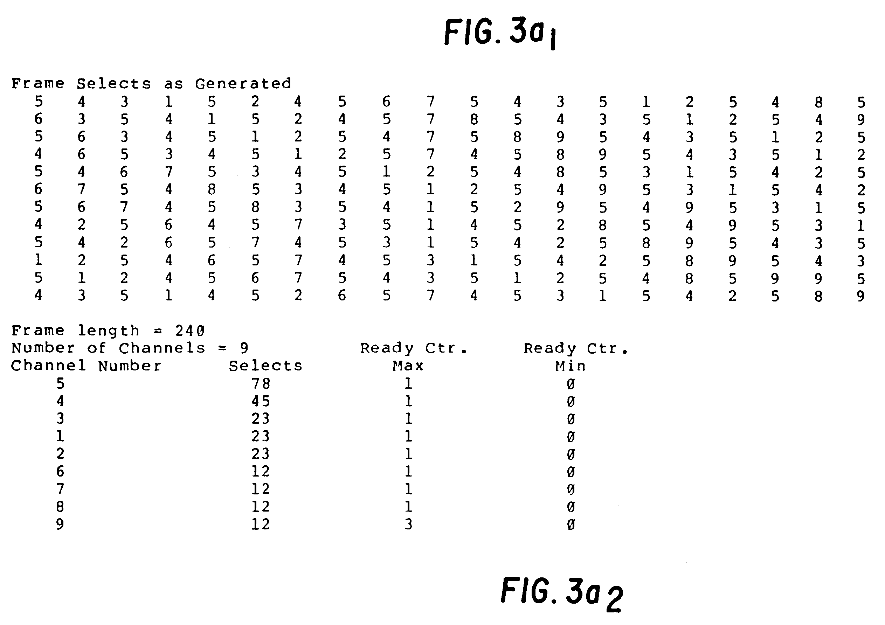

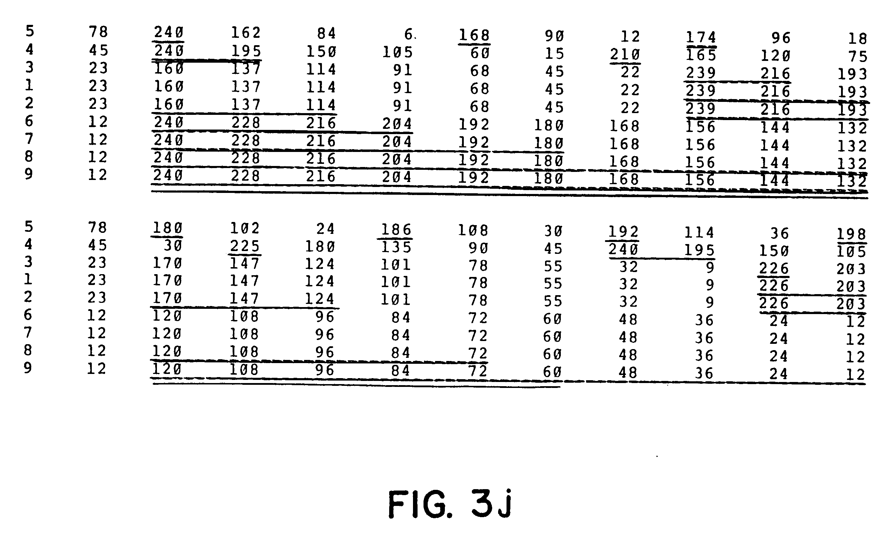

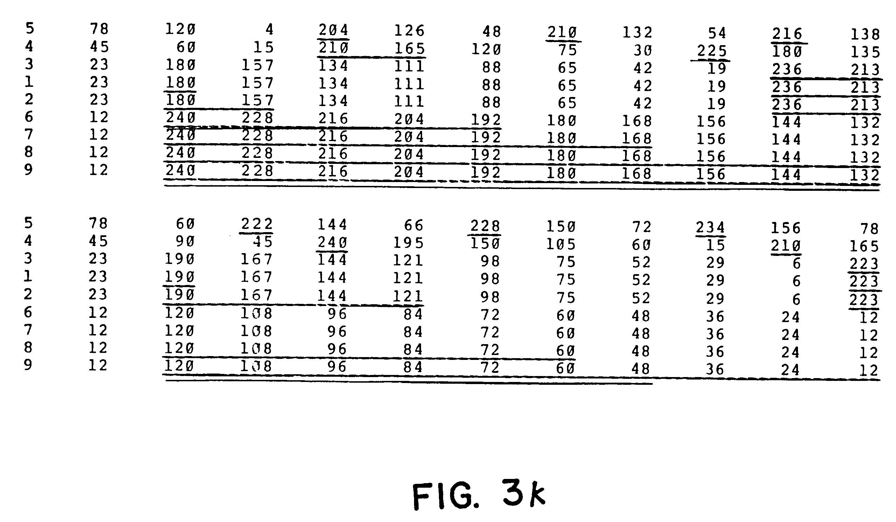

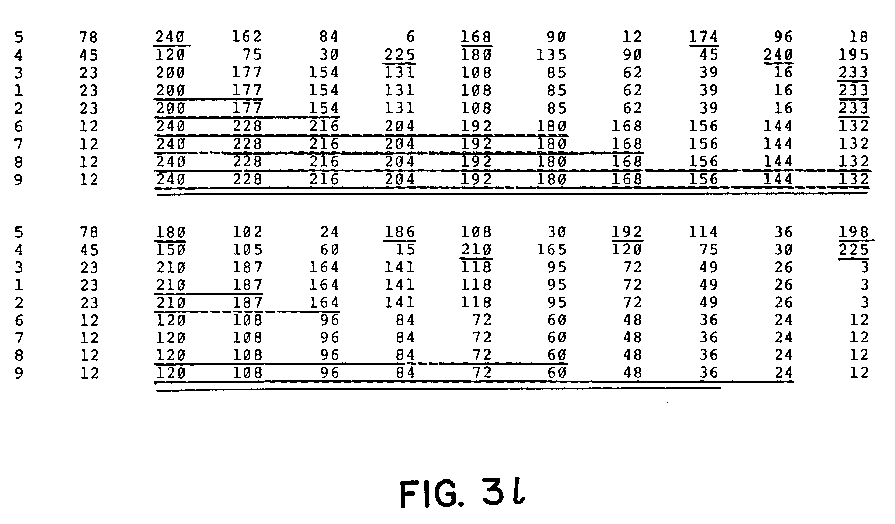

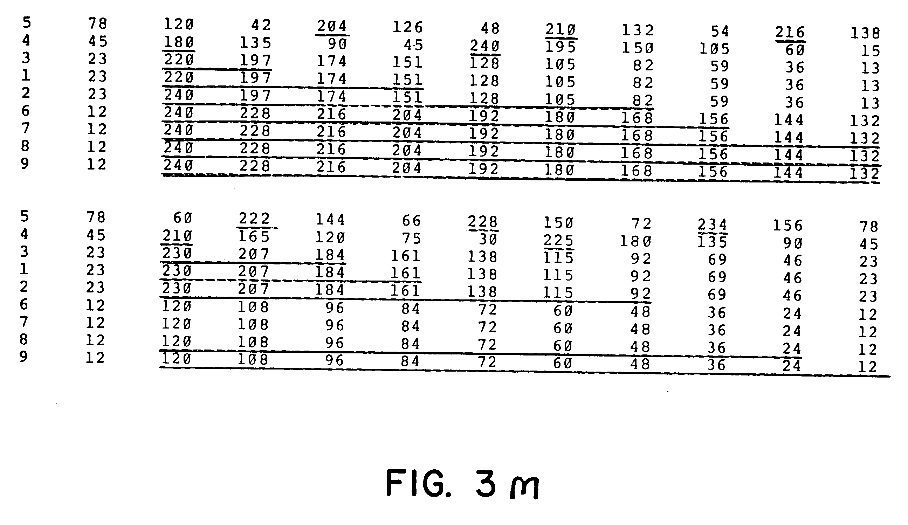

Figure 3a1 is a chart of frame selects generated according to a prior art technique;
Figure 3a2 is a chart of channel parameters of the hypothetical channels for which selects are generated;

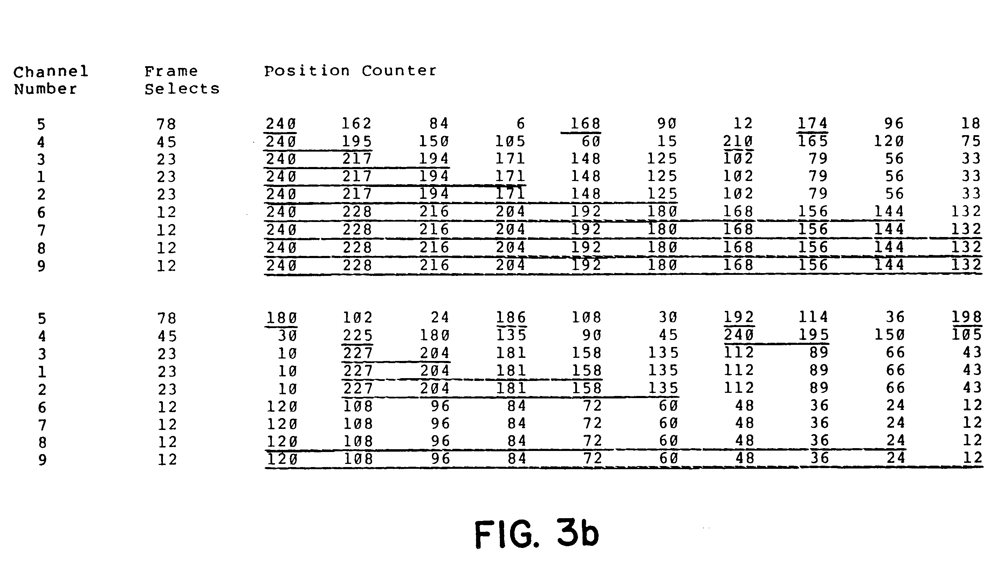

Figures 3b-3m are chars of the computations performed in generating a hypothetical frame according to a prior art technique, and a chart of the resulting frame selects;

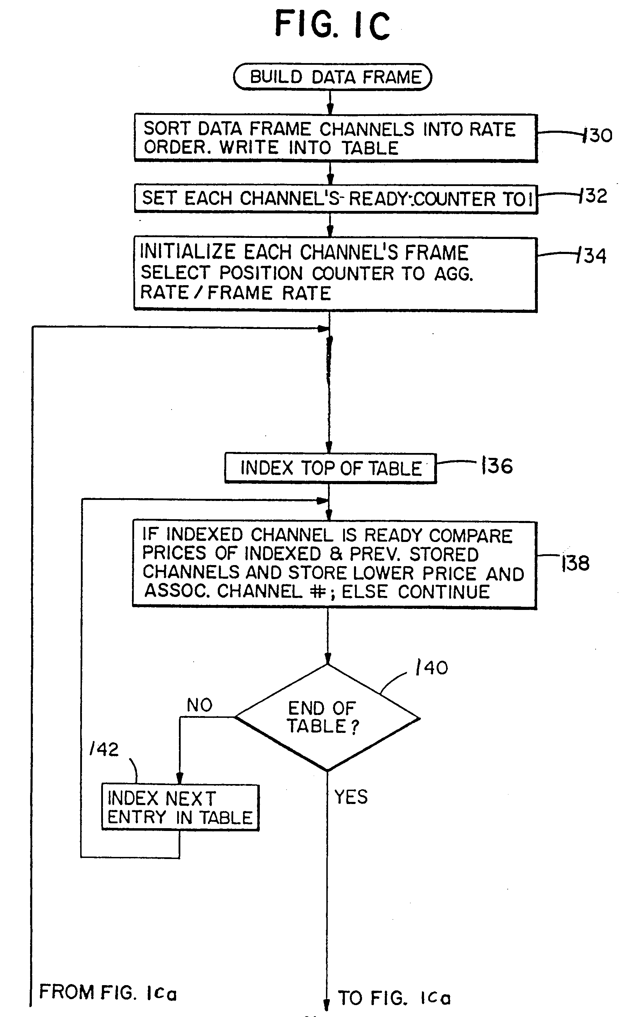

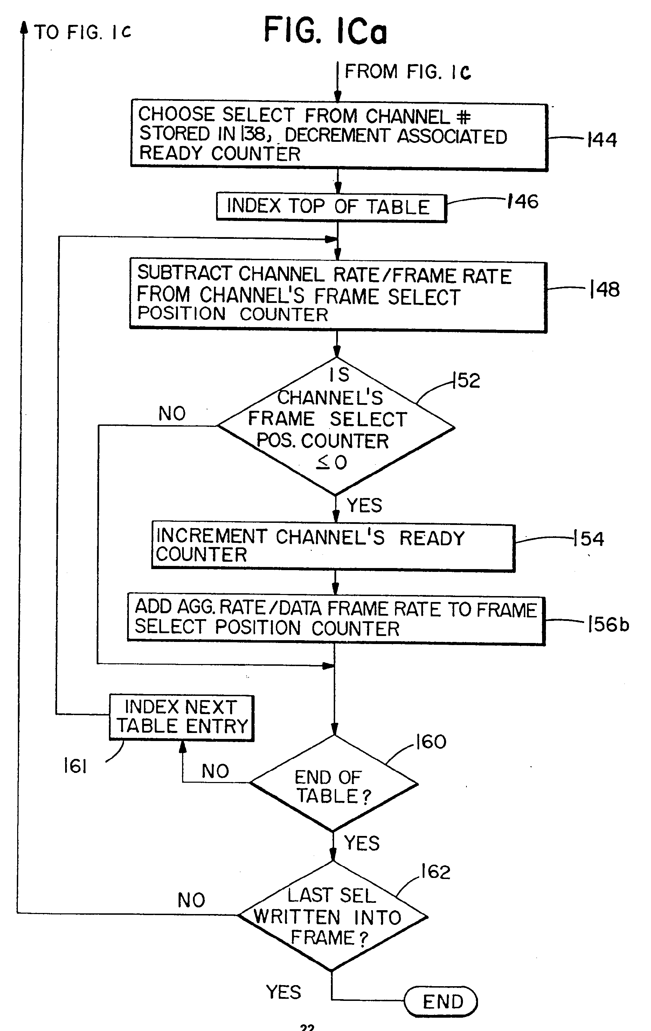

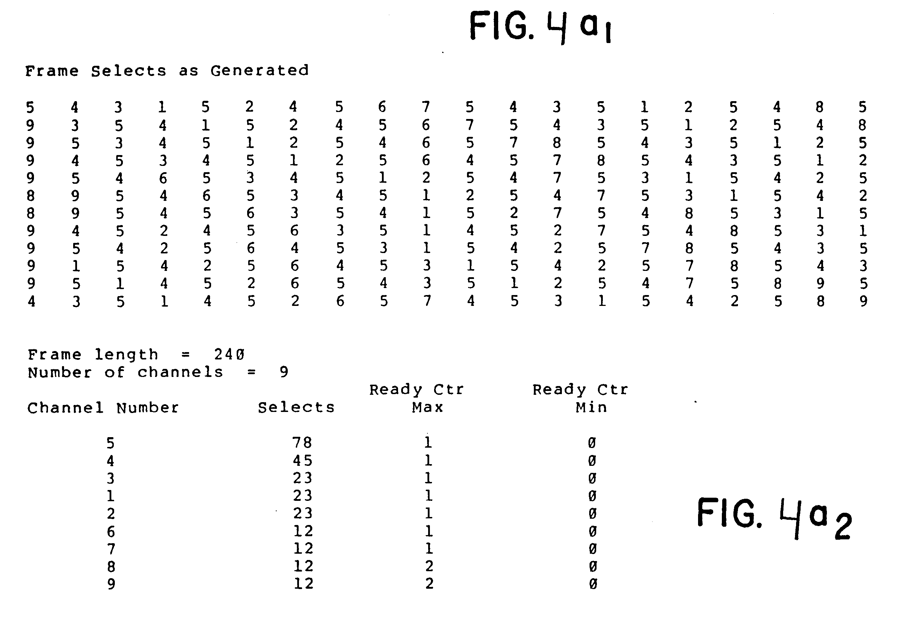

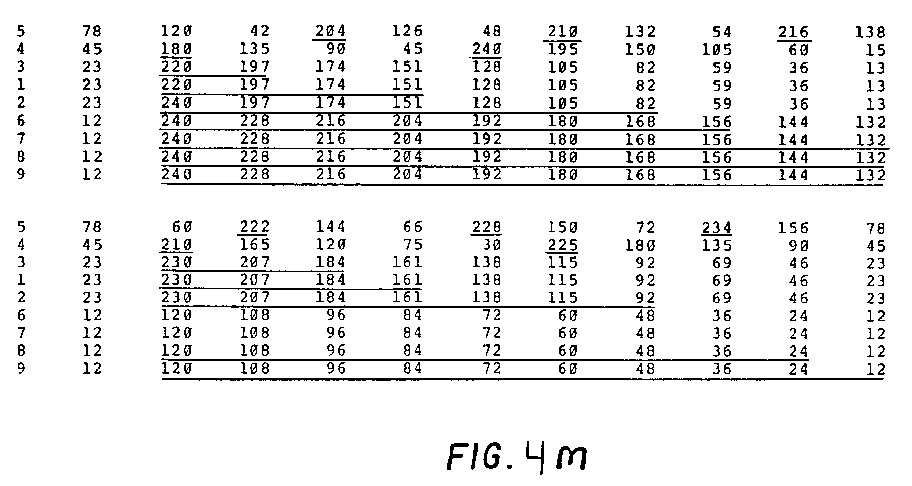

Figure 4a1 is a chart of frame selects generated according to the second embodiment of the method invention of Figures 1C and 1Ca;
Figure 4a2 is a chart of channel parameters of the hypothetical channels from which the selects are generated; and

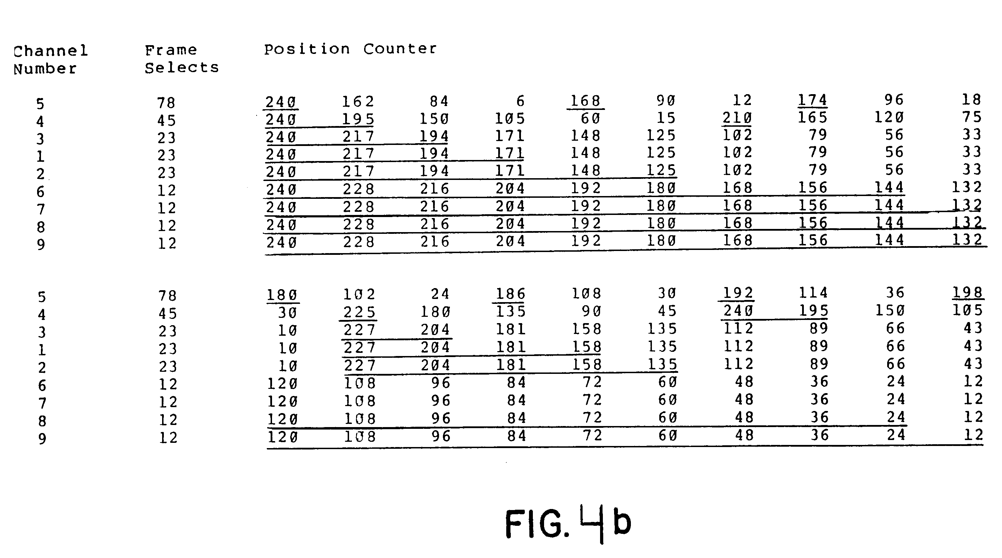

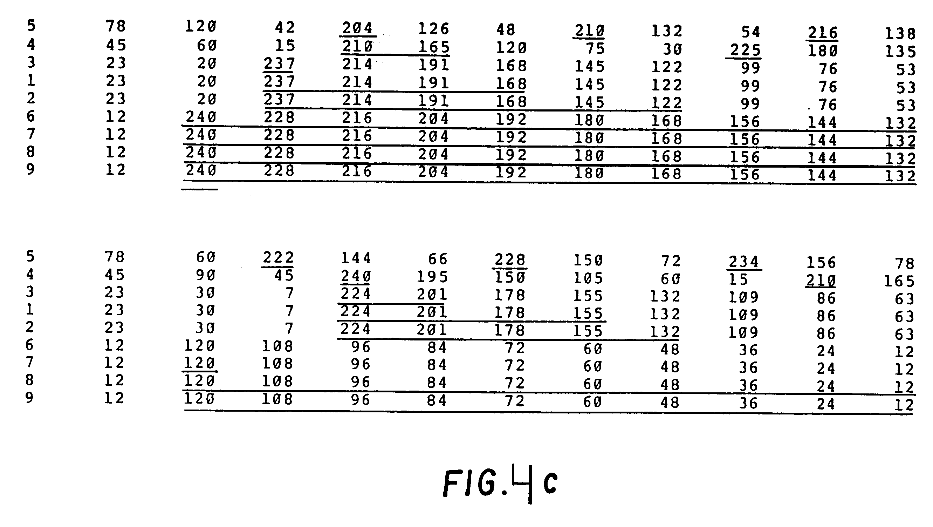

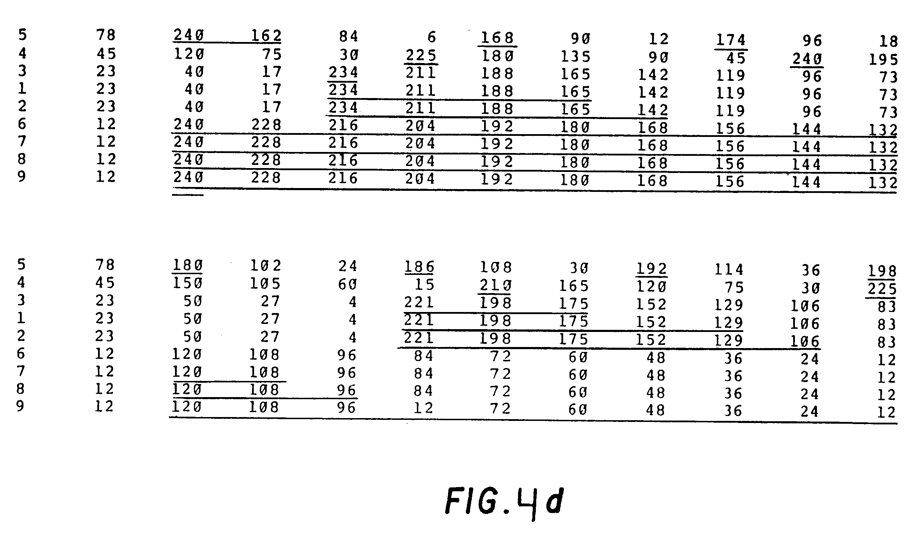

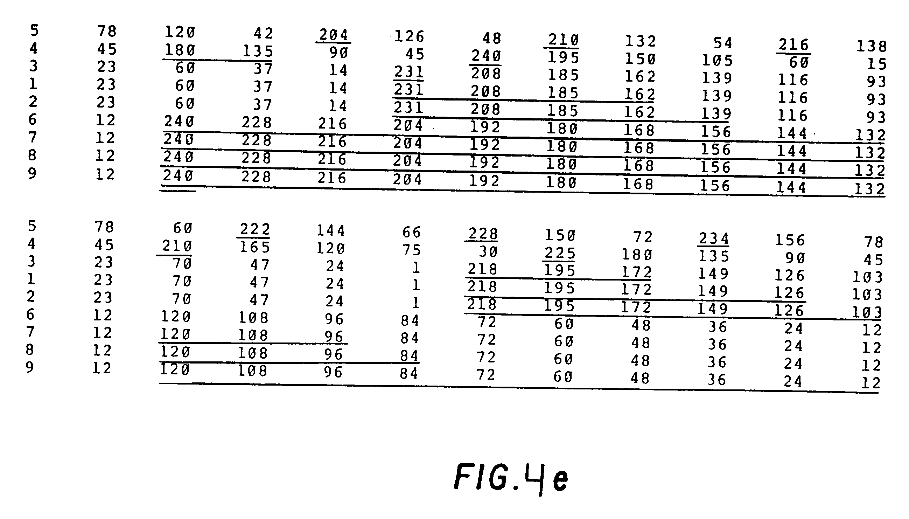

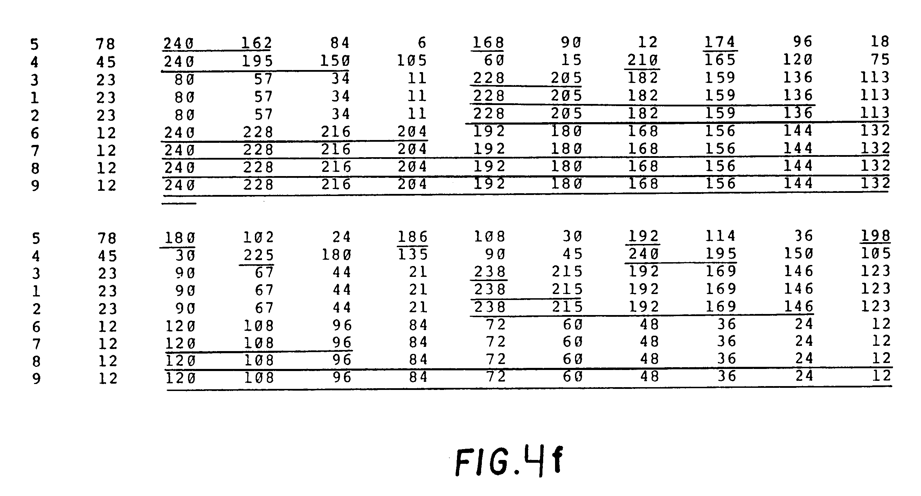

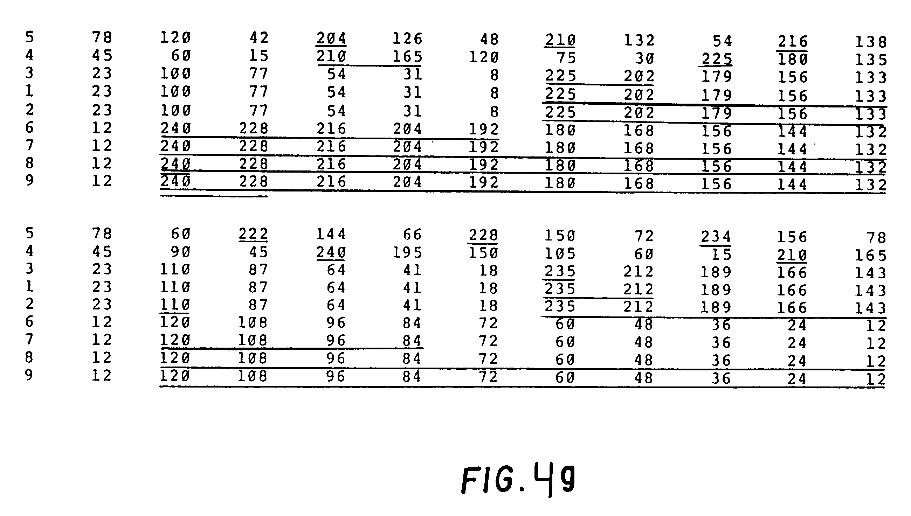

Figures 4b-4m are charts of the computations performed in generating a hypothetical frame according to the second embodiment of the invention.

### DETAILED DESCRIPTION OF THE PREFERRED EMBODIMENT

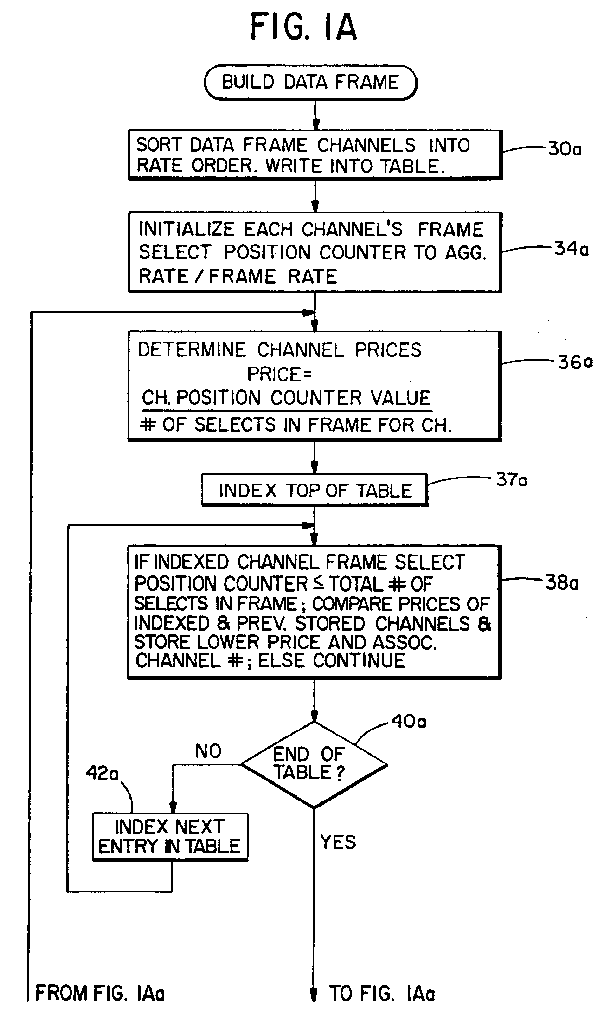

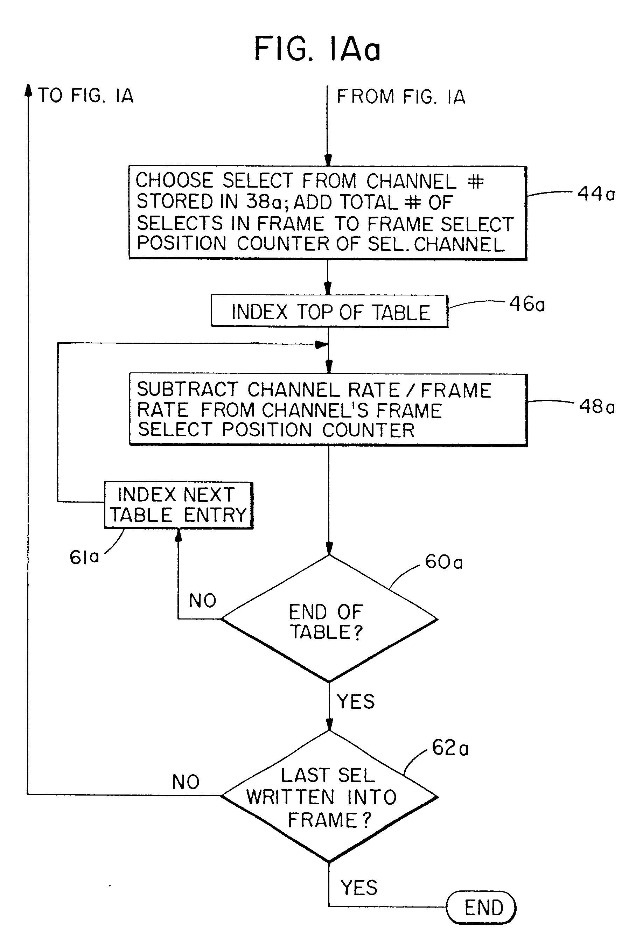

Turning to Figures 1A and 1Aa, a flow chart of the first preferred method of generating selects for a frame is provided. In the first preferred embodiment, at 30̸a the channels are ordered by rate order (as seen in Fig. 2a2) and a table is generated as having fields: the channel number, the number of selects for the channel in the frame; the channel select position counter; and the channel price. The frame select position counter of each channel is then initialized at 34a (and written into the table) to be equal to the aggregate rate divided by the frame rate. In other words, the position counters of the channels are set to a value equal to the total number of selects in the frame. With the select position counter initialized, at 36a, the prices of the channels are determined (price of channel i = frame select position counter value for channel i divided by the number of selects of channel i in the frame). Then, at 37a, the top of the table (i.e. the first entry - the data channel with the highest rate) is indexed. At 38a, if the channel is ready to contribute a bit (i.e. its select position counter value is less than or equal to the total number of selects in the frame), the price of the indexed channel is compared to the price of the lowest price previously indexed ready channel. If the indexed channel has a lower price than the previously indexed channels, its price is stored along with an indication of channel number. Otherwise, the method continues at 40̸a with a determination of whether all channels have been scanned. If all channels have not been scanned, the next channel entry is indexed at 42a and if the channel is ready, a price comparison is made at 38a. The loop is continued until all channels have been scanned. Then at 44a select is chosen from the channel (as stored in 38a) having the lowest price (i.e. the greatest cost in terms of excursion), and the frame select position counter associated with that channel is incremented by a value equal to the number of selects in the frame. Where a plurality of channels all have the same lowest price, a select is preferably made of the channel having the highest rate. While such a constraint is not necessary to follow the invention, the result naturally follows from the preferred embodiment of steps 30̸a and 38a where the channels are rate ordered and where the price of a slower ready channel is not stored unless its price is less than that of the previously scanned ready channels.

Once a select has been made and the selected channel's position counter has been incremented, the frame select position counters of all of the channels must be updated. Thus, starting with the highest rate channel addressed at 46a, and in a loop to be described hereinafter, the position counter of each channel is updated. At 48a, a value equal to the number of selects of the particular channel in the frame (which is equal to the channel rate divided by the frame rate), is subtracted from the frame select position counter of the particular channel. Then, a determination is made at 60̸a as to whether all channels have been updated. If not, the next entry in the table is indexed at 61a and the program returns to step 48a for the current channel being updated. If all channels have been updated, a determination is made at 62a as to whether the frame has been completed. If so, the program ends. If not, the program continues at step 37a where the highest rate channel is indexed to start a determination of the next select for the frame.

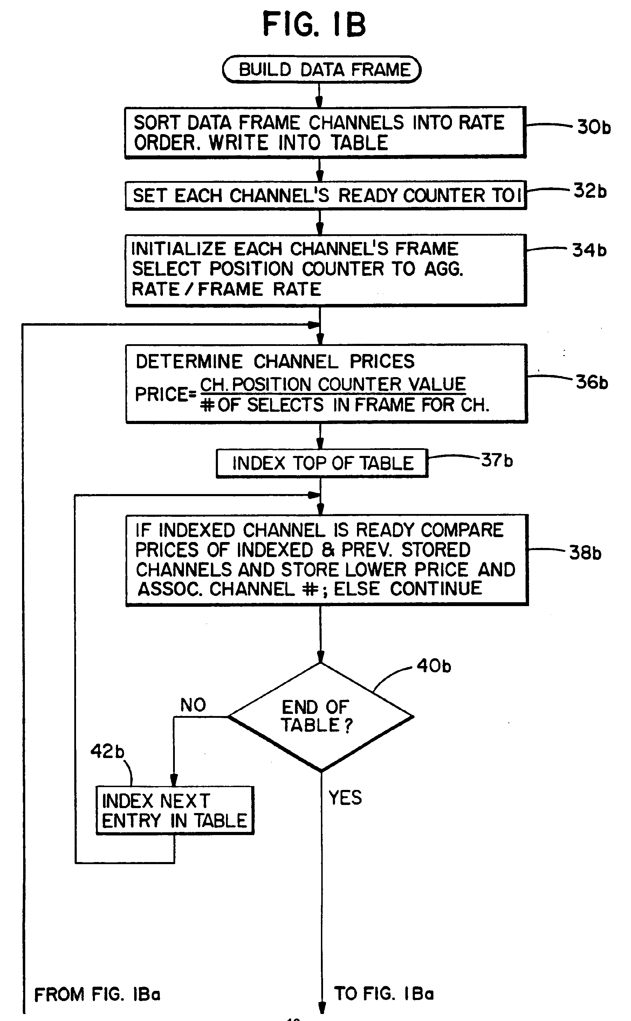

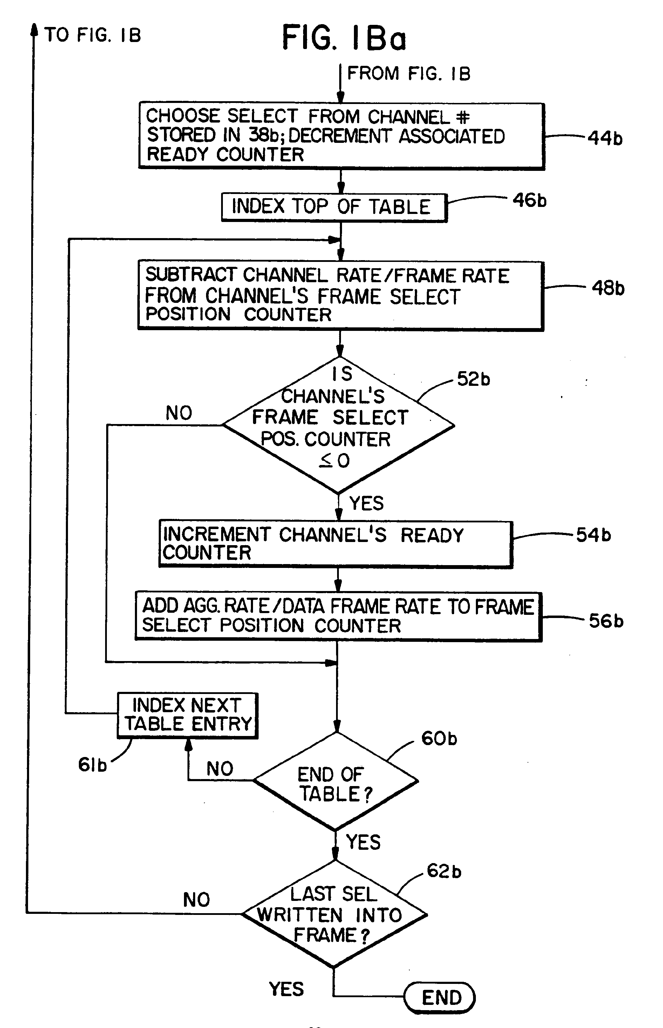

Turning to Figures 1B and 1Ba, a flow chart of an alternative first method of generating selects for a frame is provided. At 30̸b the channels are ordered by rate order (as seen in Fig. 2a2), and a table is generated with the following fields: the channel number, the number of selects for the channel in the frame; the channel select position counter; the channel price; and a channel ready counter. At 32b, the channel ready counter (indicative of the availability of a channel to contribute data) of each channel is initialized to a value of one. The frame select position counter of each channel is then initialized at 34b to be equal to the number of selects in the frame. With the ready counters set and the select position counters initialized, at 36b, the prices of the channels are determined, and at 37b, the first entry in the table is indexed. At 38b the price of the indexed channel is compared to the price of the lowest price previously indexed ready channel. If the indexed channel has a lower price than the previously indexed channels which were ready (i.e. ready counter value of one), its price is stored along with an indication of channel number. Otherwise, the method continues at 40̸b with a determination of whether all channels have been scanned. If all channels have not been scanned, the next channel entry is indexed at 42b and if it is ready, a price comparison is made at 38b. The loop is continued until all channels have been scanned. Then at 44b a select is chosen from the ready channel (as stored in 38b) having the lowest price (i.e. the greatest cost in terms of excursion), and the ready counter value of the selected channel is decremented. Where a plurality of channels all have the same lowest price, a select is preferably made of the channel having the highest rate. While such a constraint is not necessary to follow the invention, the result naturally follows from the preferred embodiment of steps 30̸b and 38b where the channels are rate ordered and where the price of a slower channel is not stored unless its price is less than that of the previously scanned ready channels.

Once a select has been made at 44b, the frame select position counters and ready counters of the channels must all be updated. Thus, starting with the highest rate channel addressed at 46b, and in a loop to be described hereinafter, the parameters of each succeeding channel are updated. At 48b, a value equal to the number of selects of the particular channel in the frame (which is equal to the channel rate divided by the frame rate), is subtracted from the frame select position counter of the particular channel. At 52b a determination is made as to whether the frame position counter is positive. If the frame position counter is positive, the program continues at step 58b, where the next channel is indexed. However, if the position counter has gone to zero or negative, the ready counter of the channel is incremented at 54b, and a value equal to the number of selects in the frame is added to the frame select position counter at 56b. Then a determination is made at 60̸b as to whether all channels have been updated. If not, the next entry in the table is indexed at 61b, and the program returns to step 48b for the current channel being updated. If all channels have been updated, a determination is made at 62b as to whether the frame has been completed. If so, the program ends. If not, the program continues at step 37b where the highest rate channel is indexed to start a determination of the next select for the frame.

Turning to Figures 2b-2m, a hypothetical frame built according to the teachings of the invention and particularly in accord with the alternative embodiment of Figures 1B and 1Ba is seen. Nine channels are provided and are to be multiplexed into frame having a total of two hundred and forty selects. As indicated in Figure 2a2, channel five is the highest rate channel and is to be selected seventy-eight times every frame, while channel four is to be selected forty-five times. Channels three, one, and two are of equal rates and are to be selected twenty-three times each, while channels six through nine are to be selected twelve times each.

Using the excursion algorithm of Figures 1B and 1Ba, selects are chosen for placement into frame depending upon the price of the channel, and secondarily upon the channel rate. In Figures 2b - 2m (as well as Figures 3b - 3m and 4b - 4m) the status of a ready counter set to one is indicated by an underline of the frame select position counter value. No underline indicates that the ready counter is at zero (i.e. the channel will not be ready to contribute information), while a double or triple underline is indicative that the ready counter value is two or three and is ready to contribute two or three bits respectively. The pattern of generated selects is seen in Fig. 2a1. Visually, the generation of the selects may be seen in Figs. 2b - 2m by locating at each select position which channel has an underlined position counter value at that position bu no underline at the next position (or double underlined at the select position and single underlined at the next position for Figures 3b - 3m). Of course, the exception to this rule is where a select is made of a channel, and immediately following the select the ready counter of that channel is increased due to the position counter having gone to zero.

Following the first ten selects horizontally as listed in Fig 2a1, the method outlined in Figure 1A and 1Aa and 1B and 1Ba provides selects of the following channels in the following order: 5, 4, 3, 1, 5, 2, 4, 5, 6, 7. Continuing through the next ten selects, it will be seen that despite channels three, one and two being ready at the thirteenth select, channel eight is chosen because its price is eight (96/12) while the price of channels one, two, and three is almost ten (227/23). Similarly, at the fifteenth select, channel nine is chosen because it has a lower price than the other ready channels. At the eighteenth select, channel one with a price of a little less than four (89/23) is chosen over channel four having a price of four and one-third (195/45), while at the twentieth select, channel four is chosen with a price of two and one-third (10̸5/45) over channel five having a price of a little more than two and one-half (198/78).

Scanning through Figures 2b-2m, it can be seen that the ready counter of any channel is limited to a value of at most one (i.e. no excursion) as the provided technique successfully minimizes excursion. Indeed, it is believed that regardless of the number and relative rates of the chosen channels, the provided technique always minimizes excursion.

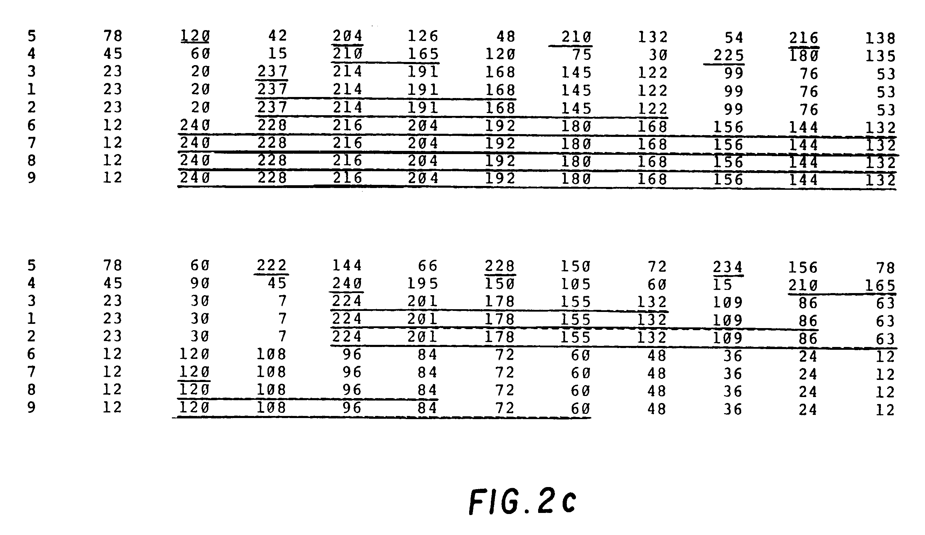

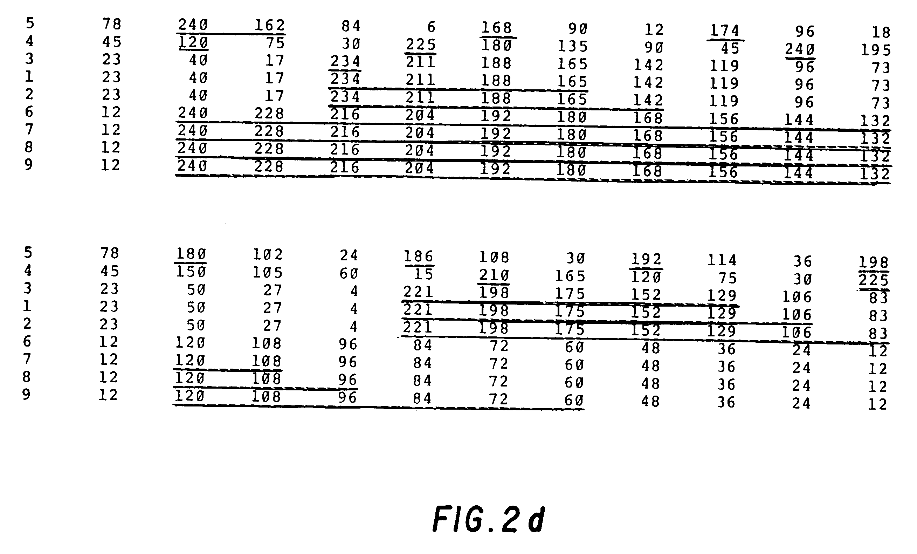

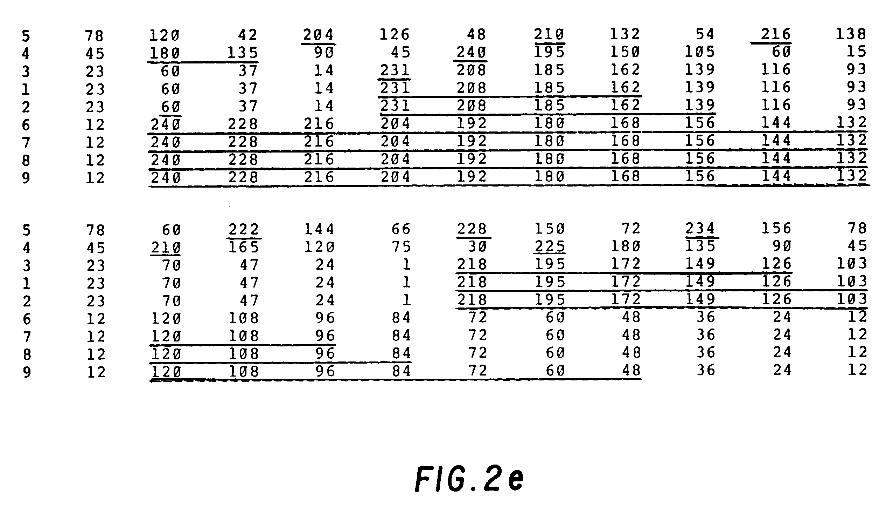

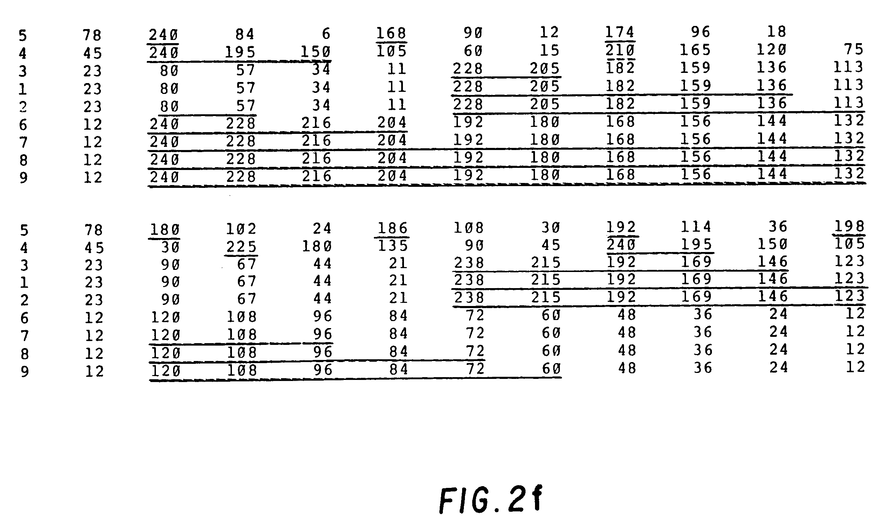

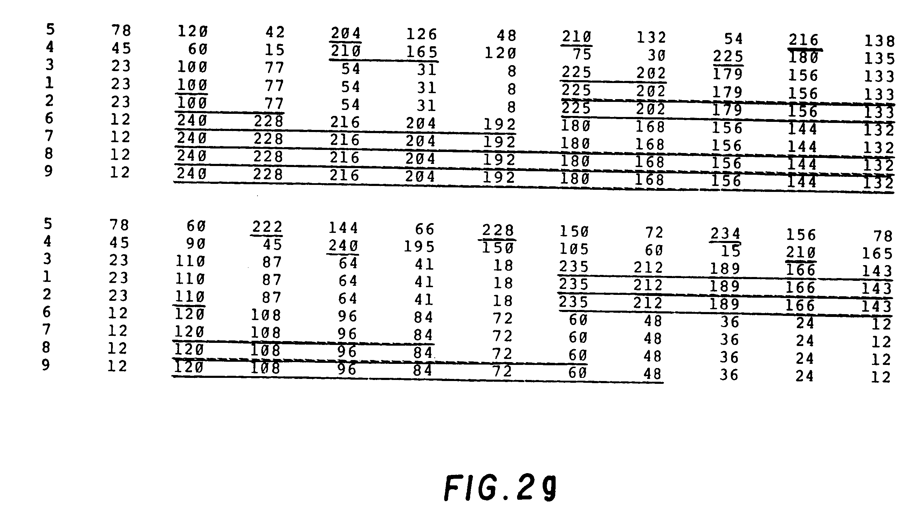

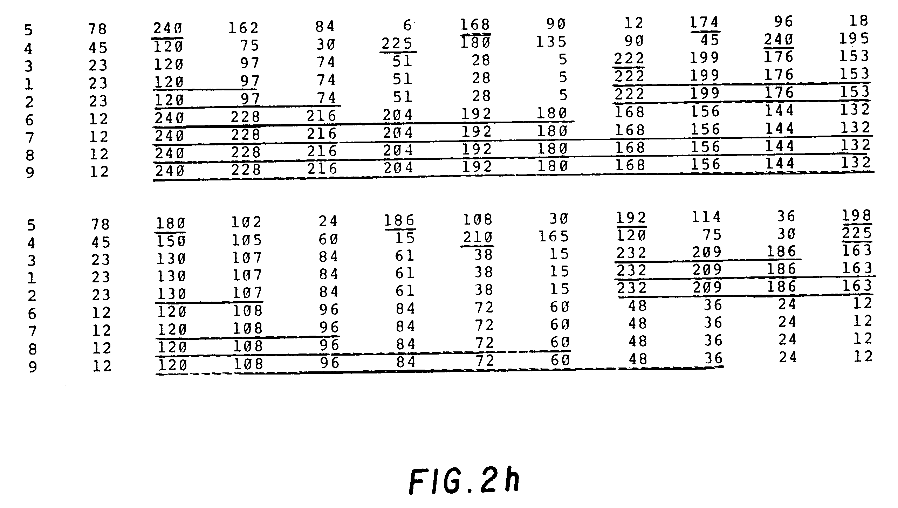

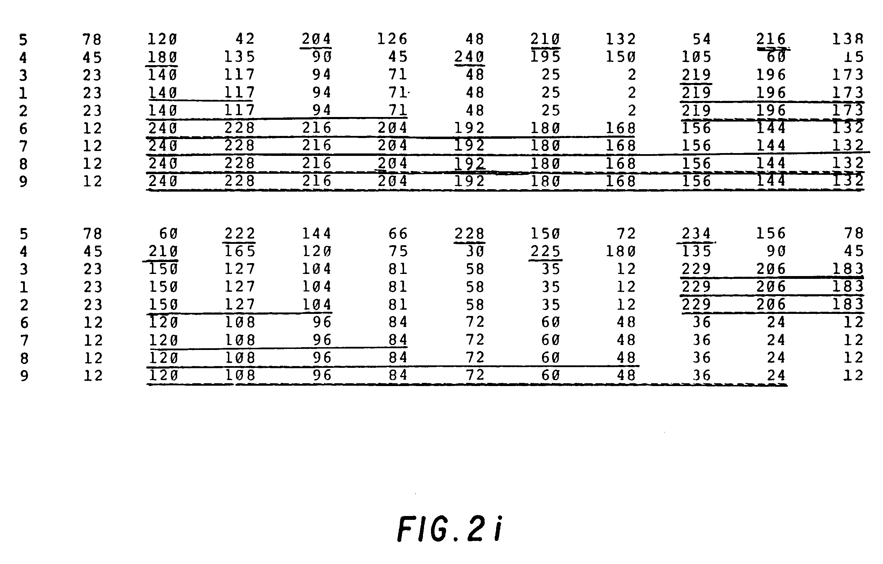

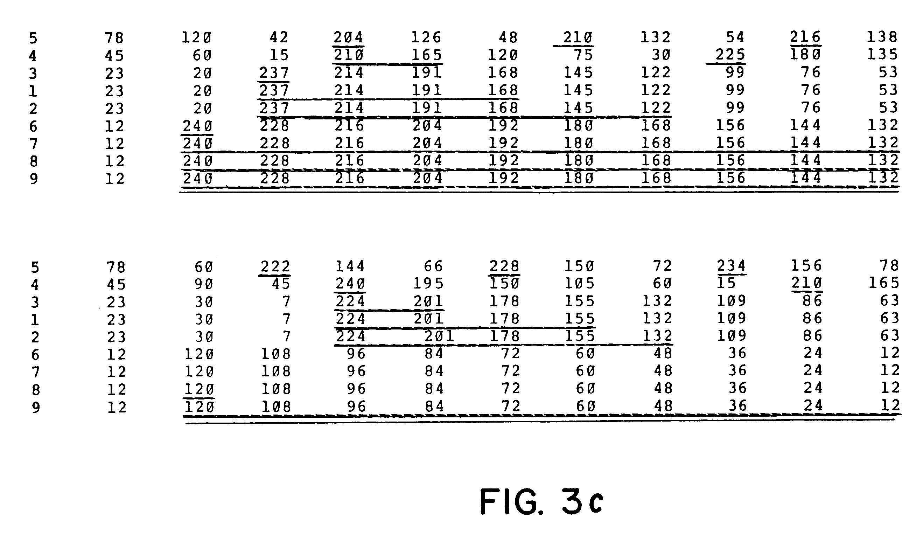

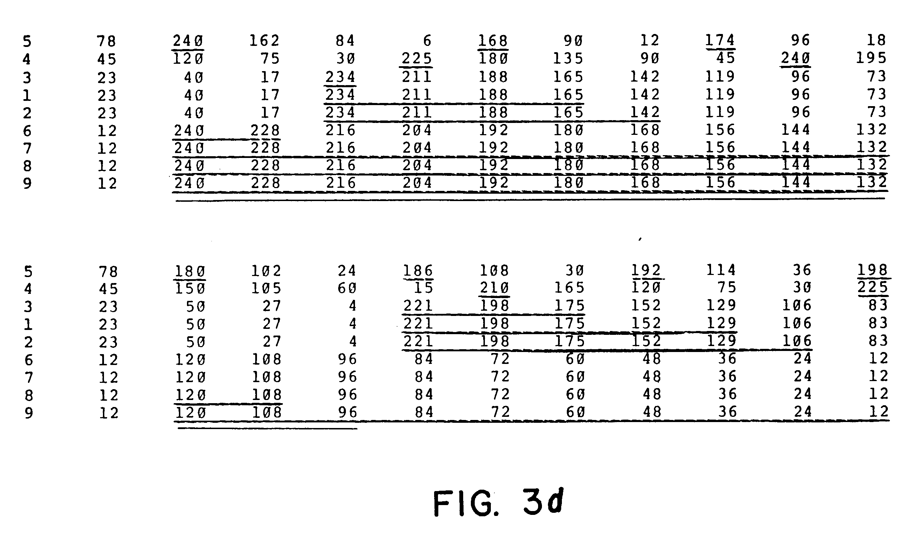

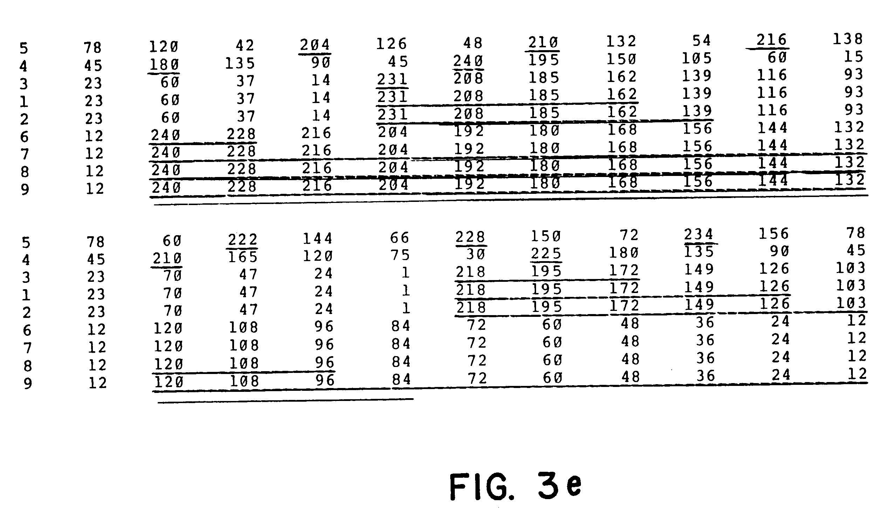

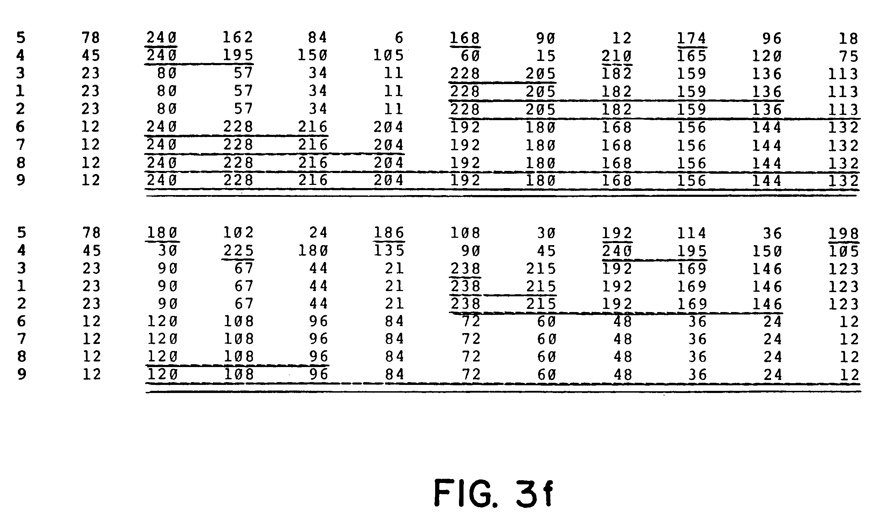

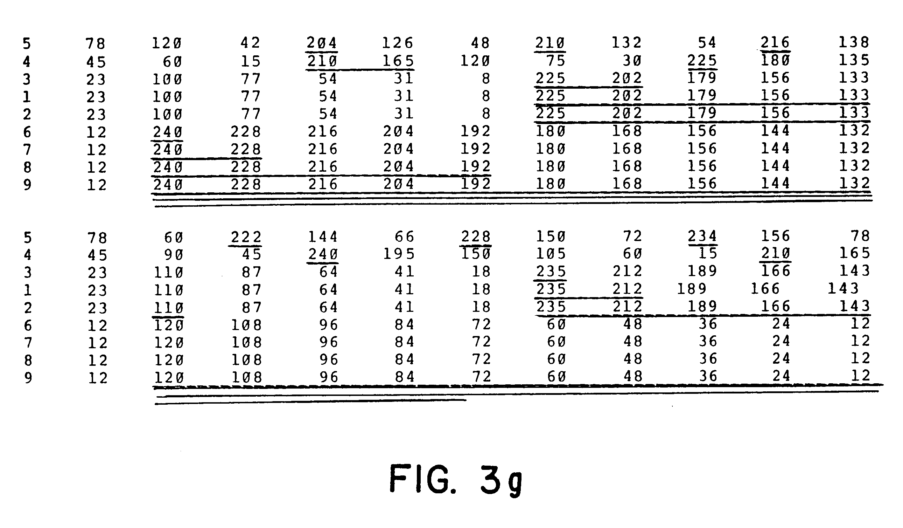

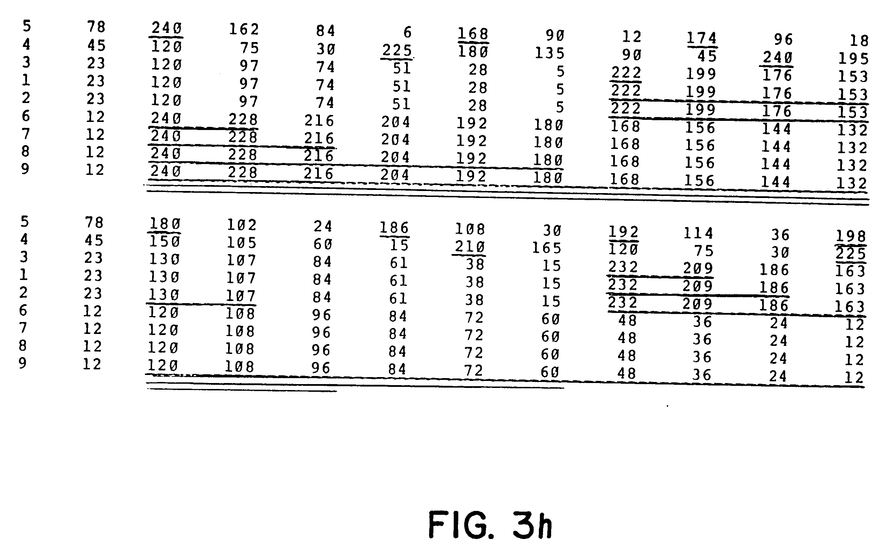

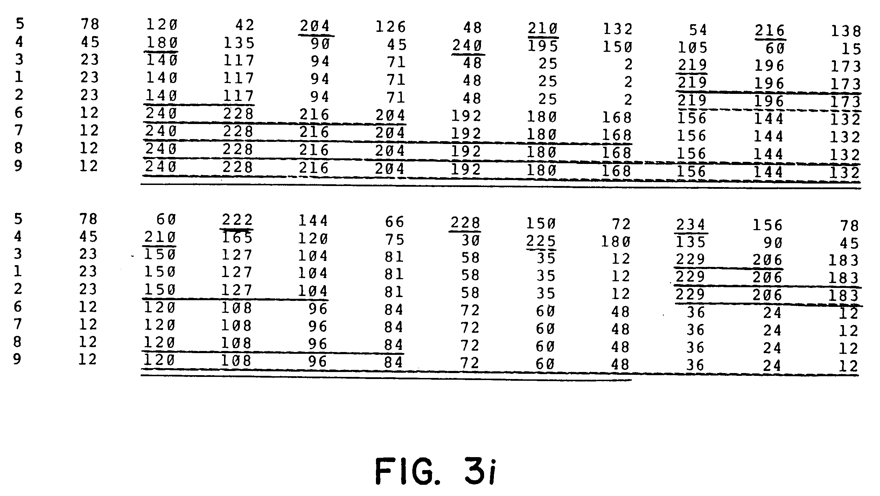

Turning to Figures 3b-3m, the status of the ready counters for the same nine channels used in Figure 2 is shown where the framing method of U.S. Patent #4,727,536 is utilized. As indicated, only channel nine ever has a ready counter exceeding a value of one. However, channel nine carries a one bit excursion from selects twenty-one through forty (see Fig. 3c), forty-one through fifty-three (see Fig. 3d), sixty-one through seventy-four (see Fig. 3e), and eighty-one through one hundred (see Fig. 3f), a two bit excursion from selects one hundred-one through one hundred fourteen, a one bit excursion from selects one hundred fifteen through one hundred twenty (see Fig. 3g), a two bit excursion from selects one hundred twenty-one through one hundred thirty-three, a one bit excursion from selects one hundred thirty-four through one hundred thirty-six (see Fig. 3h), one hundred forty-one through one hundred Fifty-seven (see Fig. 3i), one hundred sixty-one through one hundred seventy-five (see Fig. 3j), one hundred eighty-one through one hundred ninety-seven (see Fig. 3k), and two hundred-one through two hundred eighteen (see Fig. 3l).

In comparing the selects of the first embodiments of the instant invention as shown in Figures 2b - 2m to the selects of the art as shown in Figures 3b - 3m, it becomes clear that the provided method of the instant invention limits the excursion seen by the channels. Indeed, where many more channels are to be multiplexed with larger frames, it is not uncommon in the art to have excursions of four, five or even more bits. However, with the instant invention, the channel excursions never even reach one bit. This is so, because by structuring the algorithm to select the channel having the lowest price (highest cost), without any other constraints, the excursion is minimized.

Turning to Figures 1C and 1Ca, a flow chart of the second embodiment of the method of generating selects for a frame is provided. In the second embodiment, at 130̸ the channels are ordered by rate order (as seen in Fig. 4a2), and a table is generated preferably including as fields: channel number; channel rate (or number of selects per frame); select position counter; and ready counter. The ready counter of each channel is initialized to a value of one at 132. The frame select position counter of each channel is then initialized at 134 to be equal to the aggregate rate divided by the frame rate. In other words, the position counters of the channels are set to a value equal to the total number of selects in the frame. With the ready counters set and the select position counters initialized, at 136, the first channel (i.e. the data channel with the highest rate) is indexed. At 138, the value of the ready counter of the indexed channel is read and compared to the value of the ready counters of previously indexed channels. If the value of the ready counter of the indexed channel is greater than the previously stored value, the ready counter value of the indexed channel is stored along with an indication of its corresponding channel. Otherwise, the method continues at 140̸ with a determination of whether all channels have been scanned. If all channels have not been scanned, the next channel entry is indexed at 142 and another ready counter value comparison is made at 138. The loop is continued until all channels have been scanned. Then, at 144 a select is chosen from the channel having a ready counter having the greatest value (i.e the greatest cost in terms of excursion), and the ready counter value of the selected channel is decremented. Where a plurality of channels all have ready counters equaling the greatest value, a select is made of the channel having the highest rate. While such a constraint is not necessary to follow the invention, the result naturally follows from the preferred embodiment of steps 136 and 138 where the channels are rate ordered and where the ready counter value of a slower channel is not stored unless its value exceeds that of the previously scanned ready counters.

Once a select has been made at 144, the frame select position counters and ready counters of the channels must all be updated. Thus, starting with the highest rate channel addressed at 146, and in a loop to be described hereinafter, the parameters of each succeeding channel are updated. At 148, a value equal to the number of selects of the particular channel in the frame (which is equal to the channel rate divided by the frame rate), is subtracted from the frame select position counter of the particular channel. At 152 a determination is made as to whether the frame position counter is positive. If the frame position counter is positive, the program continues at step 160̸, where the next channel is indexed 161. However, if the position counter has gone to zero or negative, the ready counter of the channel is incremented at 154, and a value equal to the number of selects in the frame is added to the frame select position counter at 156. A determination is made at 160̸ whether all channels have been updated. If not, the next channel is indexed at 161 and the program returns to step 148 for the current channel being updated. If all channels have been updated, a determination is made at 162 as to whether the frame has been completed. If so, the program ends. If not, the program continues at step 136 where the highest rate channel is indexed to start a determination of the next select for the frame.

Using the channel parameters of Figure 4a2 and the method outlined in Figures 1C and 1Ca, selects of the following channels in the following order are generated (as seen in Fig. 4a1): 5, 4, 3, 1, 5, 2, 4, 5, 6, 7. Continuing through the next ten selects, it will be seen that channel nine is not selected, as at the twentieth select, the ready counter of channel five is again one, an a select is chosen from the faster channel five rather than the slower channel nine. As a result, after the twentieth select, the ready counter of channel is increased to a value of two. Because channel nine has the highest ready counter value at the twenty-first select position, a select is taken from channel nine rather than from channels six, seven, or eight. Similarly, after the fortieth select (taken from channel eight), the ready counter of channel nine increases to a value of two. Again, at the forty-first select, a select is taken from channel nine, even though channel five which has a much greater rate is available to be chosen.

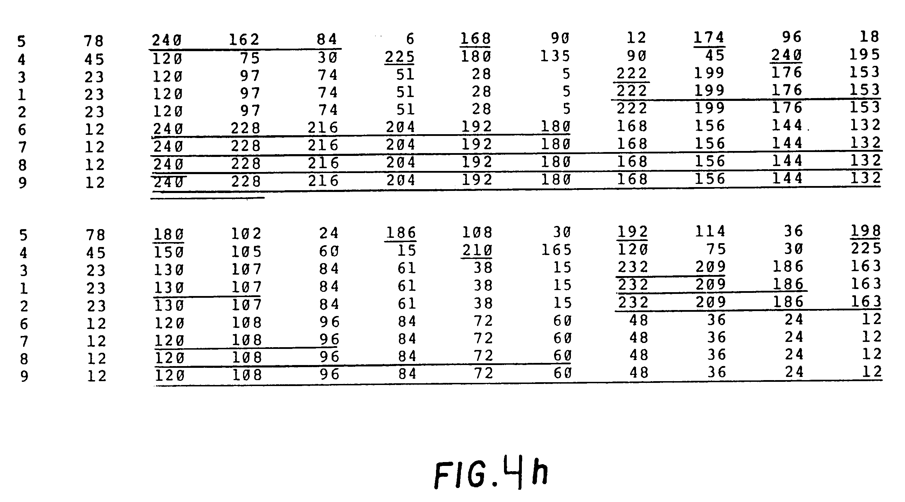

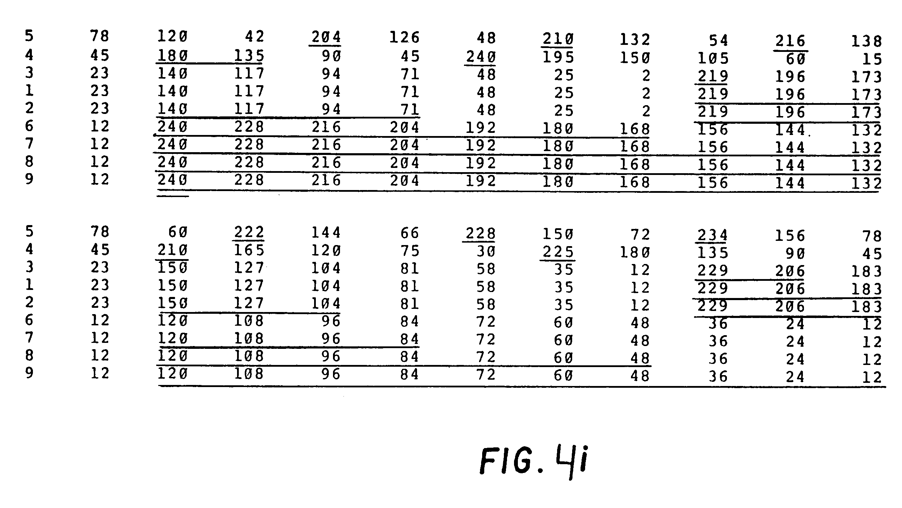

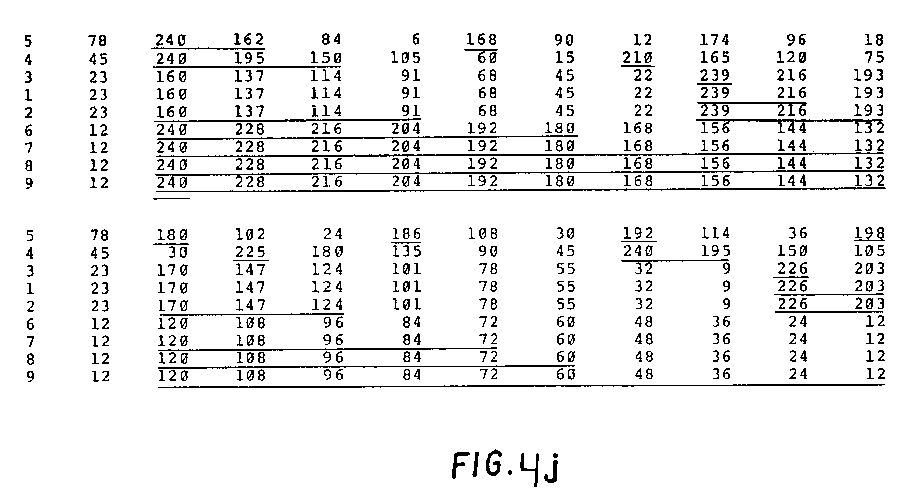

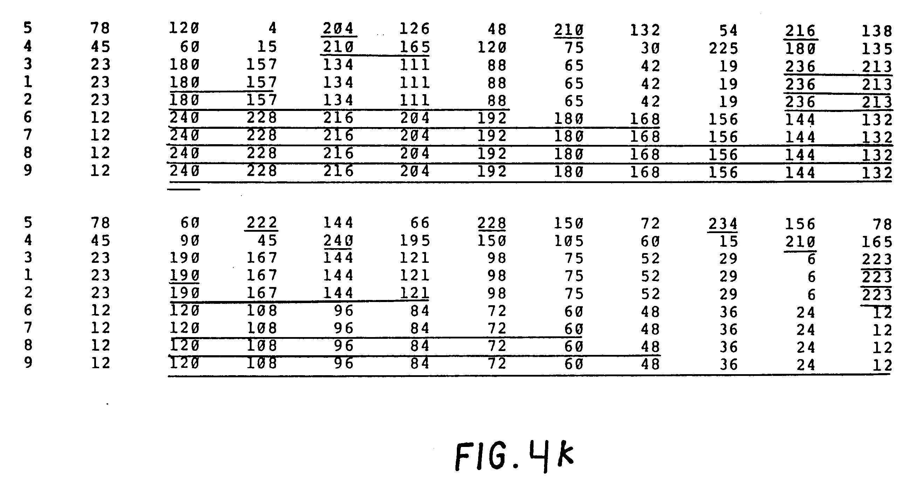

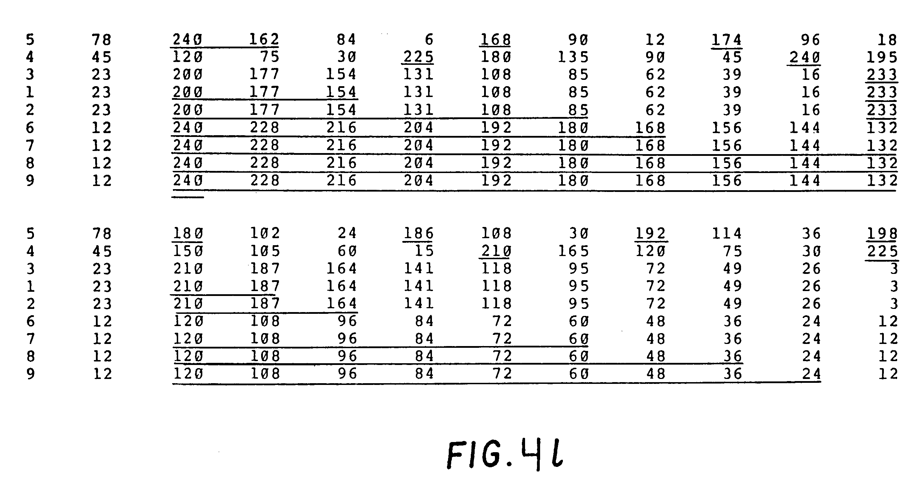

Scanning through Figures 4b - 4m, it can be seen that the ready counter of any channel is limited to at most two (i.e. one bit excursion) as the provided technique successfully limits excursion. In fact, only channels eight and nine ever reach the one bit excursion, with both of them having two bits ready at selects one hundred-one (See Fig. 4g) and one hundred twenty-one (See Fig. 4h), and channel nine also having two bits ready at selects twenty-one (See Fig. 4c), forty-one (See Fig. 4d), sixty-one (See Fig. 4e), eighty-one (See Fig. 4f), one hundred-two (See Fig. 4g), one hundred twenty-two (See Fig. 4h), one hundred forty-one (See Fig. 4i), one hundred sixty-one (See Fig. 4j), one hundred eighty-one (See Fig. 4k), and two hundred-one (See Fig. 4l).

There has been described and illustrated herein methods for choosing channel selects for a frame of a multiplexer. While particular embodiments of the invention have been described, it is not intended that the invention be limited thereby, as it is intended that the invention be broad in scope and that the specifications be read likewise. Thus, while one embodiment of the preferred invention was described with channel ready counters which are incremented as the excursion increases, those skilled in the art will appreciate that the ready counters could be arranged to decrement when and excursion increases. Or. because the value of the ready counter is always zero or one, a bit indicator can be used to indicate the readiness of the channel. Similarly, while an embodiment described channel select position counters which are decremented after each select and incremented upon their value reach zero, the position counters can be incremented after each select and decremented after reaching a threshold relating to the number of selects in the frame. In fact, instead of using a position counter and then dividing the position counter by the number of selects for the particular channel in the frame, a "price indicator" can be used which combines the two functions. What is critical is that the price of each channel be updated after each select in a manner relating to their relative channel rates, such that the lowest priced ready ready channel may be selected.

Those skilled in the art will also understand that the "price" of a channel is inversely related to the "cost" of the channel such that the lowest priced channel is the highest cost channel. Thus, a determination of highest cost is completely equivalent to a determination of lowest price, and the two should be considered one and the same. Further, while the invention was described in terms of bit multiplexing, it will be appreciated that the provided algorithm is appropriate to byte multiplexing. In fact, the advantage of the invention is greater where bytes are multiplexed due to the relatively larger buffer size for bytes as opposed to bits. Finally those skilled in the art should appreciate that the terminology used in describing the invention (eg. "channels" , "selects", "counters", "frame", "price", "cost", etc.) is intended to be broad and non-limiting so as to encompass what is readily understood by those skilled in the art. Therefore, it will be apparent to those skilled in the art that other changes and modifications may be made to the invention as described in the specification without departing from the scope of the invention so claimed.

## Claims

1. A method for ordering selects for a plurality of channels into a multiplexer frame, comprising:
(a) providing a channel select position counter for each of said plurality of channels;
(b) initialising said channel select position counters to a value corresponding to the total number of selects in said frame (34a);
(c) choosing a select of a ready channel (44a); and
(d) changing the position counter of each channel, including said selected channel, by a value corresponding to the number of selects in said frame for that particular channel (48a);
the method being characterised by
(e) choosing said select of said ready channel (44a) at least based on respective prices of said channels, wherein a channel is deemed a ready channel according to a comparison of the value of its channel select position counter to said value corresponding to the total number of selects in said frame, and wherein a channel having a relatively lower price is always chosen over a channel having a relatively higher price, and the price of a channel corresponds to a value of the position counter of that channel divided by a value corresponding to the total number of selects of that channel in the frame (38a);
(f) changing the position counter of a selected channel by said value corresponding to the total number of selects in said frame (44a); and
(g) repeating steps (c) to (f) until said frame is substantially filled with selects (62a).

2. A method according to claim 1, wherein said changing the position counters of step (d) comprises decrementing the position counters (48a), and said changing the position counter of step (f) comprises incrementing the position counters (44a).

3. A method according to claim 2, wherein said position counters are initialized to and incremented by a value equal to the total number of selects in said frame (34a,44a), said position counters are decremented by a value equalling the number of selects in said frame for that channel (48a), and a channel is deemed ready when its position counter has a value which equals or is less than said total number of selects in said frame (38a).

4. A method of ordering selects for a plurality of channels into a multiplexer frame, comprising:
(a) providing an indicator for each of said plurality of channels;
(b) initialising said indicator for each particular channel to a value related to the total number of selects in said frame;
(c) choosing a select of a ready channel; and
(d) changing said indicator of each channel, including said selected channel;
the method being characterised by
(e) providing each indicator as a channel price indicator;
(f) initialising said channel price indicator for each particular channel to a value corresponding to the total number of selects in said frame divided by the number of selects for the particular channel,
(g) choosing said select of said ready channel at least based on respective indicated prices of said channels, wherein a particular channel is deemed a ready channel according to a comparison of the value of its channel price indicator, wherein a channel having a relatively lower price is always chosen over a channel having a relatively higher price;
(h) changing the respective channel price indicator of said selected channel, by a value corresponding to unity;
(i) changing said channel price indicator of a selected channel by said value corresponding to the total number of selects in said frame divided by the number of selects for a particular channel; and
(j) repeating steps (c), (d) and (g) to (i) until said frame is substantially filled with selects.

5. A method according to claim 4, wherein said changing the respective channel price indicators of step (h) comprises decrementing the channel price indicators, and said changing the respective channel price indicators of step (i) comprises incrementing the channel price indicators.

6. A method according to claim 4 or 5, wherein said channel price indicators are initialized to and incremented by a value equal to the number of selects in said frame divided by the respective number of selects of the respective channel in said frame.

7. A method for ordering selects for a plurality of channels into a multiplexer frame, comprising:
(a) providing a channel ready indicator and a channel select position counter for each of said plurality of channels;
(b) initialising said channel ready indicator (32b);
(c) initialising said channel select position counters to a value corresponding to the total number of selects in said frame (34b);
(d) choosing a select of a channel (44b);
(e) changing the indication of the channel ready indicator to indicate channel unreadiness of said channel selected at step (d) (54b);
(f) changing the position counter of each channel by a value corresponding to the total number of selects in said frame for that channel (48b); and
(g) changing the indication of said channel ready indicator to indicate channel readiness when said channel position counter for that channel reaches or passes through a predetermined value threshold (44b);
the method being characterised by
(h) choosing said select of said channel (44b) at least based on respective prices of ready channels as indicated by said channel ready indicators, wherein a channel having a relatively lower price is always chosen over a channel having a relatively higher price, and the price of a channel corresponds to a value of the position counter of that channel divided by a value corresponding to the number of selects of that channel in the frame (38b);
(i) changing the position counter of a channel (56b) by said value corresponding to the total number of selects in said frame when said position counter for that channel reaches or passes through said predetermined value threshold (52b); and
(j) repeating steps (d) to (i) until said frame is substantially filled with selects (62b).

8. A method according to claim 7, wherein said changing the position counters of step (f) comprises decrementing the position counters (48b), and said changing the position counters of step (i) comprises incrementing the position counters (56b).

9. A method according to claim 8, wherein said position counters are initialized to a value equal to the number of selects in said frame (34b), said position counters are decremented by a value equalling the number of selects in said frame for that channel (48b), and said predetermined value threshold is zero (52b).

10. A method according to any of claims 7 to 9, wherein said changing the indication of channel ready indicators of step (e) comprises incrementing the ready indicators (54b), and said changing the value of the channel ready indicators of step (g) comprises decrementing the ready indicators (44b).

11. A method according to claim 10, wherein said channel ready indicators are initialized to a value of one (32b), and said incrementing (54b) and decrementing (44b) said channel ready indicators comprises incrementing and decrementing by a value of one.

12. A method for ordering selects for a plurality of channels into a multiplexer frame, comprising:
(a) providing a channel ready indicator for each of said plurality of channels;
(b) initialising said channel ready indicators (32b);
(c) choosing a select of a channel (44b); and
(d) changing the indication of the channel ready indicator to indicate channel unreadiness of said channel selected at step (c) (54b);
the method being characterised by
(e) providing a channel price indicator for each of said plurality of channels;
(f) initialising said channel price indicator for each particular channel to a value corresponding to the total number of selects in said frame divided by the number of selects for the particular channel;
(g) choosing said select of said channel at least based on channel prices of ready channels as indicated by said channel price indicators and said channel ready indicators, wherein a channel having a relatively lower price is always chosen over a channel having a relatively higher price;
(h) changing the channel price indicator for each channel by a value corresponding to unity;
(i) changing the channel price indicator of a channel by said value corresponding to the total number of selects in said frame divided by the number of selects for the particular channel when said channel price indicator for that channel reaches or passes through a predetermined value threshold;
(j) changing the indication of said channel ready indicator to indicate channel readiness when said channel price indicator of that channel reaches or passes through said predetermined value threshold; and
(k) repeating steps (c), (d) and (g) to (j) until said frame is substantially filled with selects.

13. A method according to claim 12, wherein said changing the channel price indicator of step (h) comprises decrementing the channel price indicator by one, and said changing the channel price indicator of step (i) comprises incrementing the channel price indicator by the number to which it was initialized, and said predetermined value threshold is zero.

14. A method according to claim 13, wherein said changing the indication of channel ready indicators of step (d) comprises incrementing the ready indicators by one, and said changing the value of the channel ready indicators of step (j) comprises decrementing the ready indicators by one.

15. A method according to any of claims 12 to 14 further comprising ordering said channels by channel rate (30b), wherein said choosing a select of a channel of step (g) (44b) is further based on said channel rate, such that where a plurality of channels have identical lowest prices, a select is chosen from the channel among those plurality having the highest channel rate.

16. A method for ordering selects for a plurality of channels into a multiplexer frame, comprising:
(a) providing a channel ready counter and a channel select position counter for each of said plurality of channels;
(b) initialising said channel ready counters (132);
(c) initialising said channel select position counters to a value corresponding to the total number of selects in said frame (134);
(d) choosing a select of a channel (144); and
(e) changing the position counter of each channel by a value corresponding to the number of selects in said frame for that channel (148);
the method being characterised by
(f) choosing said select of said channel (144) at least based on respective values of the channel ready counters of said channels, wherein a channel having a ready counter value indicative of relative greater excursion is always chosen over a channel having a ready counter value indicative of a relative lesser excursion (138);
(g) changing the position counter of a channel by said value corresponding to the total number of selects in said frame when said position counter reaches or passes through a predetermined value threshold (156);
(h) changing the value of said channel ready counter to indicate greater excursion when said channel position counter for that channel reaches or passes through said predetermined value threshold (154);
(i) changing the value of the channel ready counter to indicate less excursion of said channel selected at step (f) (144); and
(j) repeating steps (d) to (i) until said frame is substantially filled with selects (162).

17. A method according to claim 16, wherein said changing the position counters of step (e) comprises decrementing the position counters (148), and said changing the position counter of step (g) comprises incrementing the position counters (156).

18. A method according to claim 17, wherein said position counters are initialized to a value equal to the number of selects in said frame (134), said position counters are decremented (148) by a value equalling the number of selects in said frame for that channel, and said predetermined value threshold is zero (152).

19. A method according to any of claims 16 to 18, wherein said changing the value of channel ready counters of step (h) comprises incrementing the ready counters (154), and said changing the value of the channel ready counters of step (i) comprises decrementing the ready counters (144).

20. A method according to claim 19, wherein said channel ready counters are initialized to a value of one (132), and said incrementing (154) and decrementing (144) said channel ready counters comprises incrementing and decrementing value of one.

21. A method according to any one of claims 16 to 20, further comprising ordering said channels by channel rate (130), wherein said choosing a select of channel of step (f) (144) is further based on said channel rate, such that where said channel ready counters of a plurality of channels have identical values indicative of greatest excursion, a select is chosen from the channel among those plurality having the highest rate.

## Patentansprüche

1. Verfahren zum Einordnen von Auswahlabschnitten für eine Vielzahl von Kanälen in einen Multiplex-Rahmen, umfassend:
(a) Vorsehen eines Kanal-Auswahlabschnitts-Positionszählers für jeden der Vielzahl von Kanälen;
(b) Initialisieren der Kanal-Auswahlabschnitts-Positionszähler auf einen Wert, der der Gesamtzahl von Auswahlabschnitten in dem Rahmen entspricht (34a);
(c) Wählen eines Auswahlabschnitts eines bereiten Kanals (44a); und
(d) Ändern des Positionszählers jedes Kanals einschließlich des ausgewählten Kanals um einen Wert, der der Zahl der Auswahlabschnitte in dem Rahmen für den bestimmten Kanal entspricht (48a);
wobei das Verfahren gekennzeichnet ist durch
(e) Wählen des Auswahlabschnitts des bereiten Kanals (44a) wenigstens auf der Basis von entsprechenden Preisen des Kanals, wobei ein Kanal als bereiter Kanal gemäß einem Vergleich des Wertes seines Kanal-Auswahlabschnitts-Positionszählers mit dem der Gesamtzahl der Auswahlabschnitte in dem Rahmen entsprechenden Wert erachtet wird, und wobei ein Kanal mit einem verhältnismäßig niedrigen Preis stets vor einem Kanal mit verhältnismäßig höherem Preis gewählt wird, und der Preis eines Kanals einem Wert des Positionszählers des Kanals, geteilt durch einen Wert entsprechend der Gesamtzahl von Auswahlabschnitten dieses Kanals in dem Rahmen entspricht (38a);
(f) Ändern des Positionszählers eines ausgewählten Kanals um den der Gesamtzahl von Auswahlabschnitten in diesem Rahmen (44a) entsprechenden Wert; und
(g) Wiederholen der Schritte (c) bis (f), bis der Rahmen weitgehend mit Auswahlabschnitten gefüllt ist (62a).

2. Verfahren nach Anspruch 1, bei dem das Ändern der Positonszähler bei Schritt (d) ein Vermindern der Positionszähler (48a) und das Ändern des Positionszählers bei Schritt (f) ein Erhöhen der Positonszähler (44a) umfaßt.

3. Verfahren nach Anspruch 2, bei dem die Positionszähler auf einen Wert initialisiert und um einen Wert erhöht werden, der gleich der Gesamtzahl von Auswahlabschnitten in dem Rahmen ist (34a, 44a), wobei die Positionszähler um einen Wert vermindert werden, der gleich der Zahl der Auswahlabschnitte in dem Rahmen für diesen Kanal ist (48a), und wobei ein Kanal als bereit erachtet wird, wenn sein Positionszähler einen Wert hat, der gleich oder kleiner ist als die Gesamtzahl von Auswahlabschnitten in dem Rahmen (38a).

4. Verfahren zum Einordnen von Auswahlabschnitten für eine Vielzahl von Kanälen in einen Multiplex-Rahmen umfassend:
(a) Vorsehen eines Indikators für jeden der Vielzahl von Kanälen;
(b) Initialisieren des Indikators für jeden bestimmten Kanal auf einen Wert, der auf die Gesamtzahl von Auswahlabschnitten in dem Rahmen bezogen ist;
(c) Wahl eines Auswahlabschnitts eines bereiten Kanals; und
(d) Ändern des Indikators jedes Kanals einschließlich des ausgewählten Kanals;
gekennzeichnet durch
(e) Vorsehen jedes Indikators als Kanalpreisindikator;
(f) Initialisieren jedes Kanalpreisindikators für jeden bestimmten Kanal auf einen Wert, der der Gesamtzahl der Auswahlabschnitte in einem Rahmen, geteilt durch die Anzahl der Auswahlabschnitte für den bestimmten Kanal entspricht;
(g) Wählen des Auswahlabschnitts des bereiten Kanals mindestens auf der Basis von entsprechenden angezeigten Preisen des Kanals, wobei ein bestimmter Kanal als bereiter Kanal gemäß einem Vergleich des Wertes seines Kanalpreisindikators erachtet wird, wobei ein Kanal mit einem verhältnismäßig niedrigen Preis immer vor einem Kanal mit verhältnismäßig höherem Preis gewählt wird:
(h) Ändern des entsprechenden Kanalpreisindikators des ausgewählten Kanals um einen Wert entsprechend Eins;
(i) Ändern des Kanalpreisindikators eines ausgewählten Kanals um den Wert, der der Gesamtzahl von Auswahlabschnitten in dem Rahmen, geteilt durch die Anzahl der Auswahlabschnitte für einen bestimmten Kanal entspricht; und
(j) Wiederholen der Schritte (c), (d) und (g) bis (i), bis der Rahmen weitgehend mit Auswahlabschnitten gefüllt ist.

5. Verfahren nach Anspruch 4, bei dem die Änderung der entsprechenden Kanalpreisindikatoren bei Schritt (h) eine Verminderung der Kanalpreisindikatoren und die Änderung der entsprechenden Kanalpreisindikatoren bei Schritt (i) eine Erhöhung der Kanalpreisindikatoren umfaßt.

6. Verfahren nach Anspruch 4 oder 5, bei dem die Kanalpreisindikatoren auf einen Wert initialisiert und um einen Wert erhöht werden, der gleich der Anzahl von Auswahlabschnitten in dem Rahmen, geteilt durch die entsprechende Anzahl von Auswahlabschnitten des entsprechenden Kanals in dem Rahmen ist.

7. Verfahren zum Einordnen von Auswahlabschnitten für eine Vielzahl von Kanälen in einen Multiplex-Rahmen, umfassend:
(a) Vorsehen eines Kanalbereitschaftsindikators und eines Kanal-Auswahlabschnitts-Positionszählers für jeden der Vielzahl von Kanälen;
(b) Initialisieren des Kanalbereitschaftsindikators (32b);
(c) Initialisieren der Kanal-Auswahlabschnitts-Positionszähler auf einen Wert, der der Gesamtzahl von Auswahlabschnitten in dem Rahmen entspricht (34b);
(d) Wählen eines Auswahlabschnitts eines Kanals (44b);
(e) Ändern der Anzeige des Kanalbereitschaftsindikators, um die Nicht-Bereitschaft des beim Schritt (d) ausgewählten Kanals anzuzeigen (54b);
(f) Ändern des Positionszählers jedes Kanals um einen Wert, der der Gesamtzahl der Auswahlabschnitte in dem Rahmen für diesen Kanal entspricht (48b); und
(g) Ändern des Kanalbereitschaftszählers, um die Kanalbereitschaft anzuzeigen, wenn der Kanal-Positionszähler für diesen Kanal einen vorgegebenen Schwellenwert erreicht oder durchläuft (44b), wobei das Verfahren gekennzeichnet ist durch:
(h) Wählen des Auswahlabschnitts des Kanals (44b) mindestens auf der Basis von entsprechenden Preisen von bereiten Kanälen wie von den Kanalbereitschaftszählern angezeigt, wobei ein Kanal mit verhältnismäßig niedrigerem Preis stets vor einem Kanal mit verhältnismäßig höherem Preis gewählt wird, und der Preis eines Kanals einem Wert des Positionszählers dieses Kanals, geteilt durch einen Wert entsprechend der Anzahl von Auswahlabschnitten dieses Kanals in dem Rahmen entspricht (38b);
(i) Ändern des Positionszählers eines Kanals (56b) um den der Gesamtzahl von Auswahlabschnitten in dem Rahmen entsprechenden Wert, wenn der Positionszähler für diesen Kanal den vorgegebenen Schwellenwert erreicht oder durchläuft (52b); und
(j) Wiederholen der Schritte (d) bis (i), bis der Rahmen weitgehend mit Auswahlabschnitten gefüllt ist (62b).

8. Verfahren nach Anspruch 7, bei dem das Ändern der Positionszähler bei Schritt (f) ein Vermindern der Positionszähler (48b) und das Ändern der Positionszähler bei Schritt (i) ein Erhöhen der Positionszähler umfaßt (56b).

9. Verfahren nach Anspruch 8, bei dem die Positioszähler auf einen Wert initialisiert werden, der gleich der Anzahl von Auswahlabschnitten in dem Rahmen ist (34b), wobei die Positionszähler um einen Wert vermindert werden, der gleich der Anzahl von Auswahlabschnitten des Rahmens für diesen Kanal ist (48b), und wobei der vorgegebene Schwellenwert Null ist (52b).

10. Verfahren nach einem der Ansprüche 7 bis 9, bei dem das Ändern der Anzeige von Kanalbereitschaftsindikatoren bei Schritt (e) ein Erhöhen der Bereitschaftsindikatoren (54b) und das Ändern des Wertes der Kanalbereitschaftsindikatoren bei Schritt (g) ein Vermindern der Bereitschaftsindikatoren umfaßt (44b).

11. Verfahren nach Anspruch 10, bei dem die Kanalbereitschaftsindikatoren auf einem Wert von Eins initialisiert werden (32b), wobei das Erhöhen (54b) und das Vermindern (44b) der Kanalbereitschaftsindikatoren das Erhöhen und das Vermindern um einen Wert von Eins umfaßt.

12. Verfahren zum Einordnen von Auswahlabschnitten für eine Vielzahl von Kanälen in einen Multiplex-Rahmen, umfassend:
(a) Vorsehen eines Kanalbereitschaftsindikators für jeden der Vielzahl von Kanälen;
(b) Initialisieren der Kanalbereitschaftsindikatoren (32b);
(c) Wählen eines Auswahlabschnitts eines Kanals (44b); und
(d) Ändern der Anzeige des Kanalbereitschaftsindikators, um die Nichtbereitschaft des bei Schritt (c) ausgewählten Kanals anzuzeigen (54b); wobei das Verfahren gekennzeichnet ist durch
(e) Vorsehen eines Kanalpreisindikators für jeden der Vielzahl von Kanälen;
(f) Initialisieren des Kanalpreisindikators für jeden Kanal auf einen Wert, der der Gesamtzahl der Auswahlabschnitte in dem Rahmen, geteilt durch die Anzahl von Ausfallabschnitten für den bestimmten Kanal entspricht;
(g) Wählen des Auswahlabschnitts des Kanals wenigstens auf der Basis von Kanalpreisen von bereiten Kanälen, wie von den Kanalpreisindikatoren und den Kanalbereitschaftsindikatoren angezeigt, wobei ein Kanal mit verhältnismäßig niedrigerem Preis stets vor einem Kanal mit einem verhältnismäßig höheren Preis gewählt wird;
(h) Ändern des Kanalpreisindikators für jeden Kanal um einen Wert von Eins;
(i) Ändern des Kanalpreisindikators eines Kanals um den Wert, der der Gesamtzahl von Auswahlabschnitten in dem Rahmen, geteilt durch die Anzahl von Auswahlabschnitten für den bestimmten Kanal entspricht, wenn der Kanalpreisindikator für diesen Kanal einen vorgegebenen Schwellenwert erreicht oder durchläuft;
(j) Ändern der Anzeige des Kanalbereitschaftsindikators, um die Kanalbereitschaft anzuzeigen, wenn der Kanalpreisindikator dieses Kanals den vorgegebenen Schwellenwert erreicht oder durchläuft;
(k) Wiederholen der Schritte (c), (d) und (g) bis (j), bis der Rahmen weitgehend mit Auswahlabschnitten gefüllt ist.

13. Verfahren nach Anspruch 12, bei dem das Ändern des Kanalpreisindikators bei Schritt (h) das Vermindern des Kanalpreisindikators um Eins, und das Ändern des Kanalpreisindikators bei Schritt (i) das Erhöhen des Kanalpreisindikators um die Zahl umfaßt, auf die er initialisiert wurde und der vorgegebene Schwellenwert Null ist.

14. Verfahren nach Anspruch 13, bei dem das Ändern der Anzeige der Kanalbereitschaftsindikatoren bei Schritt (d) das Erhöhen der Bereitschaftsindikatoren um Eins und das Ändern des Wertes der Kanalbereitschaftsindikatoren bei Schritt (j) das Vermindern der Bereitschaftsindikatoren um Eins umfaßt.

15. Verfahren nach einem der Ansprüche 12 - 14, umfassend das Einordnen der Kanäle nach Kanalrate (30b), wobei die Wahl eines Auswahlabschnitts eines Kanals beim Schritt (g) (44b) ferner auf der Kanalrate beruht, so daß, wenn eine Vielzahl von Kanälen identische niedrige Preis hat, aus dem Kanal unter dieser Vielzahl ein Auswahlabschnitt mit der höchsten Kanalrate gewählt wird.

16. Verfahren zum Einordnen von Auswahlabschnitten für eine Vielzahl von Kanälen in einen Multiplex-Rahmen, umfassend:
(a) Vorsehen eines Kanalbereitschaftszählers und eines Kanal-Auswahlabschnitts-Positionszählers für jeden der Vielzahl von Kanälen;
(b) Initialisieren der Kanalbereitschaftszähler (132),
(c) Initialisieren der Kanal-Auswahlabschnitts-Positionszähler auf einen Wert, der der Gesamtzahl von Auswahlabschnitten in dem Rahmen entspricht (134);
(d) Wählen eines Auswahlabschnittes eines Kanals (144); und
(e) Ändern des Positionszählers jedes Kanals um einen Wert, der der Anzahl der Auswahlabschnitte in dem Rahmen für diesen Kanal entspricht (148);
wobei das Verfahren gekennzeichnet ist durch
(f) Wählen des Auswahlabschnittes des Kanals (144) zumindest auf der Basis von entsprechenden Werten der Kanalbereitschaftszähler dieser Kanäle, wobei ein Kanal mit einem Bereitschaftszählerwert, der eine verhältnismäßig größere Abweichung anzeigt, stets vor einem Kanal mit einem Bereitschaftszählerwert gewählt wird, der eine verhältnismäßig kleinere Abweichung anzeigt (138);
(g) Ändern des Positionszählers eines Kanals um den Wert, der der Gesamtzahl der Auwahlabschnitte in dem Kanal entspricht, wenn der Positionszähler einen vorgegebenen Schwellenwert erreicht oder diesen durchläuft (156);
(h) Ändern des Wertes des Kanalbereitschaftszählers, um eine größere Abweichung anzuzeigen, wenn der Kanalpositionszähler für diesen Kanal den vorgegebenen Schwellenwert erreicht oder durchläuft (154);
(i) Ändern des Wertes des Kanalbereitschaftszählers, um eine kleinere Abweichung des beim Schritt (f) (144) ausgewählten Kanals anzuzeigen; und
(j) Wiederholen der Schritte (d) bis (i), bis der Rahmen weitgehend mit Auswahlabschnitten gefüllt ist (162).

17. Verfahren nach Anspruch 16, bei dem die Änderung der Positionszähler bei Schritt (e) ein Vermindern der Positionszähler (148) und die Änderung der Positionszähler bei Schritt (g) ein Erhöhen der Positionszähler umfaßt (156).

18. Verfahren nach Anspruch 17, bei dem die Positionszähler auf einen Wert initialisiert werden, der gleich der Anzahl von Auswahlabschnitten in dem Rahmen ist (134), wobei die Positionszähler um einen Wert vermindert werden (148), der gleich der Anzahl der Auswahlabschnitte in dem Rahmen für diesen Kanal ist und der vorgegebene Schwellenwert Null ist (152).

19. Verfahren nach einem der Ansprüche 16 - 18, bei dem das Ändern des Wertes von Kanalbereitschaftszählern bei Schritt (h) ein Erhöhen der Bereitschaftszähler (154) und das Ändern des Wertes der Bereitschaftszähler bei Schritt (i) ein Vermindern der Bereitschaftszähler umfaßt (144).

20. Verfahren nach Anspruch 19, bei dem die Kanalbereitschaftszähler auf einen Wert von Eins initialisiert werden (132), und bei dem das Erhöhen (154) und das Vermindern (144) der Kanalbereitschaftszähler das Erhöhen und Vermindern um einen Wert von Eins umfaßt.

21. Verfahren nach einem der Ansprüche 16 - 20, umfassend das Ordnen der Kanäle nach der Kanalrate (130), wobei die Wahl eines Auswahlabschnittes des Kanals bei Schritt (f) (144) ferner auf der Kanalrate beruht, so daß, wenn die Kanalbereitschaftszähler einer Vielzahl von Kanälen identische Werte haben, die die größte Abweichung anzeigen, aus dem Kanal von dieser Vielzahl ein Auswahlabschnitt mit der größten Rate gewählt wird.

## Revendications

1. Méthode de classement de sélections d'une pluralité de voies dans une trame multiplex, comprenant:
(a) la fourniture d'un compteur de position de sélection de voie pour chacune de la pluralité de voies;
(b) l'initialisation desdits compteurs de position de sélection de voie à une valeur correspondant au nombre total de sélection dans ladite trame (34a);
(c) le choix d'une sélection d'une voie prête (44a); et
(d) le changement du compteur de position de chaque voie, y compris de ladite voie sélectionnée, par une valeur correspondant au nombre de sélections dans ladite trame de cette voie particulière (48a);
la méthode étant caractérisée par
(e) le choix de ladite sélection de ladite voie prête (44a) basé au moins sur des prix respectifs desdites voies, dans lequel une voie est jugée être une voie prête conformément à une comparaison de la valeur de son compteur de position de sélection de voie avec ladite valeur correspondant au nombre total de sélections dans ladite trame, et dans lequel une voie ayant un prix relativement inférieur est toujours choisie de préférence à une voie ayant un prix relativement supérieur, et le prix d'une voie correspond à une valeur du compteur de position de cette voie divisée par une valeur correspondant au nombre total de sélections de cette voie dans la trame (38a);
(f) le changement du compteur de position d'une voie sélectionnée par ladite valeur correspondant au nombre total de sélections dans ladite trame (44a); et
(g) la répétition des étapes (c) à (f) jusqu'à ce que ladite trame soit substantiellement remplie de sélections (62a).

2. Méthode selon la revendication 1, dans laquelle ledit changement des compteurs de position de l'étape (d) comprend la décrémentation des compteurs de position (48ad), et ledit changement du compteur de position de l'étape (f) comprend l'incrémentation des compteurs de position (44a).

3. Méthode selon la revendication 2, dans laquelle lesdits compteurs de position sont initialisés à et incrémentés par une valeur égale au nombre total de sélections dans ladite trame (34a,44a), lesdits compteurs de position sont décrémentés par une valeur égalant le nombre de sélections dans ladite trame de cette voie (48a), et une voie est jugée prête quand son compteur de position a une valeur qui est égale ou inférieure audit nombre total de sélections dans ladite trame (38a).

4. Méthode de classement de sélections d'une pluralité de voies dans une trame multiplex, comprenant:
(a) la fourniture d'un indicateur pour chacune de ladite pluralité de voies;
(b) l'initialisation dudit indicateur pour chaque voie particulière à une valeur liée au nombre total de sélections dans ladite trame;
(c) le choix d'une sélection d'une voie prête; et
(d) le changement dudit indicateur de chaque voie, y compris de ladite voie sélectionnée;
la méthode étant caractérisée par
(e) la fourniture de chaque indicateur comme un indicateur de prix de voie;
(f) l'initialisation dudit indicateur de voie de chaque voie particulière à une valeur correspondant au nombre total de sélections dans ladite trame divisé par le nombre de sélections de la voie particulière,
(g) le choix de ladite sélection de ladite voie prête basé au moins sur des prix indiqués respectifs desdites voies, dans lequel une voie particulière est jugée être une voie prête conformément à une comparaison de la valeur de son indicateur de prix de voie, dans lequel une voie ayant un prix relativement inférieur est toujours choisie de préférence à une voie ayant un prix relativement supérieur;
(h) le changement de l'indicateur de prix de voie respectif de ladite voie sélectionnée, par une valeur correspondant à l'unité;
(i) le changement dudit indicateur de prix de voie d'une voie sélectionnée par ladite valeur correspondant au nombre total de sélections dans ladite trame divisé par le nombre de sélections d'une voie particulière; et
(j) la répétition des étapes (c), (d) et (g) à (i) jusqu'à ce que ladite trame soit substantiellement remplie de sélections.

5. Méthode selon la revendication 4, dans laquelle ledit changement des indicateurs de prix de voie respectifs de l'étape (h) comprend la décrémentation des indicateurs de prix de voie, et ledit changement des indicateurs de prix de voie respectifs de l'étape (i) comprend l'incrémentation des indicateurs de prix de voie.

6. Méthode selon la revendication 4 ou 5, dans laquelle lesdits indicateurs de prix de voie sont initialisés à et incrémentés par une valeur égale au nombre de sélections dans ladite trame divisé par le nombre respectif de sélections de la voie respective dans ladite trame.

7. Méthode de classement de sélections d'une pluralité de voies dans une trame multiplex, comprenant:
(a) la fourniture d'un indicateur de voie prête et d'un compteur de position de sélection de voie pour chacune de ladite pluralité de voies;
(b) l'initialisation dudit indicateur de voie prête (32b);
(c) l'initialisation desdits compteurs de position de sélection de voie à une valeur correspondant au nombre total de sélections dans ladite trame (34b);
(d) le choix d'une sélection d'une voie (44b);
(e) le changement de l'indication de l'indicateur de voie prête pour indiquer l'indisponibilité de ladite voie sélectionnée à l'étape (d) (54b);
(f) le changement du compteur de position de chaque voie par une valeur correspondant au nombre total de sélections dans ladite trame de cette voie (48b); et
(g) le changement de l'indication dudit indicateur de voie prête pour indiquer la disponibilité de la voie quand ledit compteur de position de voie de cette voie atteint ou dépasse un seuil de valeur prédéterminé (44b);
la méthode étant caractérisée par
(h) le choix de ladite sélection de ladite voie (44b) basé au moins sur des prix respectifs des voies prêtes tels qu'indiqués par lesdits indicateurs de voie prête, dans lequel une voie ayant un prix relativement inférieur est toujours choisie de préférence à une voie ayant un prix relativement supérieur, et le prix d'une voie correspond à une valeur du compteur de position de cette voie divisée par une valeur correspondant au nombre de sélections de cette voie dans la trame (38b);
(i) le changement du compteur de position d'une voie (56b) par ladite valeur correspondant au nombre total de sélections dans ladite trame quand ledit compteur de position de cette voie atteint ou dépasse ledit seuil de valeur prédéterminé (52b); et
(j) la répétition des étapes (d) à (i) jusqu'à ce que ladite trame soit substantiellement remplie de sélections (62b).

8. Méthode selon la revendication 7, dans laquelle ledit changement des compteurs de position de l'étape (f) comprend la décrémentation des compteurs de position (48b), et ledit changement des compteurs de position de l'étape (i) comprend l'incrémentation des compteurs de position (56b).

9. Méthode selon la revendication 8, dans laquelle lesdits compteurs de position sont initialisés à une valeur égale au nombre de sélections dans ladite trame (34b), lesdits compteurs de position sont décrémentés par une valeur égalant le nombre de sélections dans ladite trame de cette voie (48b), et ledit seuil de valeur prédéterminé est zéro (52b).

10. Méthode selon l'une quelconque des revendications 7 à 9, dans laquelle ledit changement de l'indication des indicateurs de voie prête de l'étape (e) comprend l'incrémentation des indicateurs prêts (54b), et ledit changement de la valeur des indicateurs de voie prête de l'étape (g) comprend la décrémentation des indicateurs prêts (44b).

11. Méthode selon la revendication 10, dans laquelle lesdits indicateurs de voie prête sont initialisés à une valeur de un (32b), et ladite incrémentation (54b) et décrémentation (44b) desdits indicateurs de voie prête comprend l'incrémentation et la décrémentation par une valeur de un.

12. Méthode de classement de sélections d'une pluralité de voies dans une trame multiplex, comprenant:
(a) la fourniture d'un indicateur de voie prête pour chacune de ladite pluralité de voies;
(b) l'initialisation desdits indicateurs de voie prête (32b);
(c) le choix d'une sélection d'une voie (44b); et
(d) le changement de l'indication de l'indicateur de voie prête pour indiquer l'indisponibilité de ladite voie sélectionnée à l'étape (c) (54b);
la méthode étant caractérisée par
(e) la fourniture d'un indicateur de prix de voie pour chacune de ladite pluralité de voies;
(f) l'initialisation dudit indicateur de prix de voie de chaque voie particulière à une valeur correspondant au nombre total de sélections dans ladite trame divisé par le nombre de sélections de la voie particulière;
(g) le choix de ladite sélection de ladite voie basé au moins sur les prix de voie des voies prêtes tels qu'indiqués par lesdits indicateurs de prix de voie et lesdits indicateurs de voie prête, dans lequel une voie ayant un prix relativement inférieur est toujours choisie de préférence à une voie ayant un prix relativement supérieur;
(h) le changement de l'indicateur de prix de voie de chaque voie par une valeur correspondant à l'unité;
(i) le changement de l'indicateur de prix de voie d'une voie par ladite valeur correspondant au nombre total de sélections dans ladite trame divisé par le nombre de sélections de la voie particulière quand ledit indicateur de prix de voie de cette voie atteint ou dépasse un seuil de valeur prédéterminé;
(j) le changement de l'indication dudit indicateur de voie prête pour indiquer la disponibilité de la voie quand ledit indicateur de prix de voie de cette voie atteint ou dépasse ledit seuil de valeur prédéterminé; et
(k) la répétition des étapes (c), (d) et (g) à (j) jusqu'à ce que ladite trame soit substantiellement remplie de sélections.

13. Méthode selon la revendication 12, dans laquelle ledit changement de l'indicateur de prix de voie de l'étape (h) comprend la décrémentation de l'indicateur de prix de voie par un, et ledit changement de l'indicateur de prix de voie de l'étape (i) comprend l'incrémentation de l'indicateur de prix de voie par le nombre auquel il avait été initialisé, et ledit seuil de valeur prédéterminé est zéro.

14. Méthode selon la revendication 13, dans laquelle ledit changement de l'indication des indicateurs de voie prête de l'étape (d) comprend l'incrémentation des indicateurs prêts par un, et ledit changement de la valeur des indicateurs de voie prête de l'étape (j) comprend la décrémentation des indicateurs prêts par un.

15. Méthode selon l'une quelconque des revendications 12 à 14, comprenant en outre le classement desdites voies par vitesse de voie (30b), dans lequel ledit choix d'une sélection d'une voie de l'étape (g) (44b) est en outre basé sur ladite vitesse de voie, de telle sorte que lorsqu'une pluralité de voies ont des prix les plus bas identiques, une sélection de la voie parmi cette pluralité ayant la vitesse de voie la plus haute est choisie.

16. Méthode de classement de sélections d'une pluralité de voies dans une trame multiplex, comprenant:
(a) la fourniture d'un compteur de voie prête et d'un compteur de position de sélection de voie pour chacune de ladite pluralité de voies;
(b) l'initialisation desdits compteurs de voie prête (132);
(c) l'initialisation desdits compteurs de position de sélection de voie à une valeur correspondant au nombre total de sélections dans ladite trame (134);
(d) le choix d'une sélection d'une voie (144); et
(e) le changement du compteur de position de chaque voie par une valeur correspondant au nombre de sélections dans ladite trame de cette voie (148);
la méthode étant caractérisée par
(f) le choix de ladite sélection de ladite voie (144) basé au moins sur des valeurs respectives des compteurs de voie prête desdites voies, dans lequel une voie ayant une valeur de compteur prêt indicative d'une excursion relativement supérieure est toujours choisie de préférence à une voie ayant une valeur de compteur prêt indicative d'une excursion relativement inférieure (138);
(g) le changement du compteur de position d'une voie par ladite valeur correspondant au nombre total de sélections dans ladite trame quand ledit compteur de position atteint ou dépasse un seuil de valeur prédéterminé (156);
(h) le changement de la valeur dudit compteur de voie prête pour indiquer une excursion supérieure quand ledit compteur de position de voie de cette voie atteint ou dépasse ledit seuil de valeur prédéterminé (154);
(i) le changement de la valeur du compteur de voie prête pour indiquer une excursion inférieure de ladite voie sélectionnée à l'étape (f) (144); et
(j) la répétition des étapes (d) à (i) jusqu'à ce que ladite trame soit substantiellement remplie de sélections (162).

17. Méthode selon la revendication 16, dans laquelle ledit changement des compteurs de position de l'étape (e) comprend la décrémentation des compteurs de position (148), et ledit changement du compteur de position de l'étape (g) comprend l'incrémentation des compteurs de position (156).

18. Méthode selon la revendication 17, dans laquelle lesdits compteurs de position sont initialisés à une valeur égale au nombre total de sélections dans ladite trame (134), lesdits compteurs de position sont décrémentés (148) par une valeur égalant le nombre de sélections dans ladite trame de cette voie, et ledit seuil de valeur prédéterminé est zéro (152).

19. Méthode selon l'une quelconque des revendications 16 à 18, dans laquelle ledit changement de la valeur des compteurs de voie prête de l'étape (h) comprend l'incrémentation des compteurs prêts (154) et ledit changement de la valeur des compteurs de voie prête de l'étape (i) comprend la décrémentation des compteurs prêts (144).

20. Méthode selon la revendication 19, dans laquelle lesdits compteurs de voie prête sont initialisés à une valeur de un (132), et ladite incrémentation (154) et décrémentation (144) desdits compteurs de voie prête comprend l'incrémentation et la décrémentation de la valeur par un.

21. Méthode selon l'une quelconque des revendications 16 à 20, comprenant en outre le classement desdites voies par vitesse de voie (130), dans lequel ledit choix d'une sélection de voie de l'étape (f) (144) est en outre basé sur ladite vitesse de voie, de telle sorte que lorsque lesdits compteurs de voie prête d'une pluralité de voies ont des valeurs identiques indicatives de la plus grande excursion, une sélection de la voie parmi cette pluralité ayant la vitesse la plus haute est choisie.
